# EUROPEAN PATENT APPLICATION

(11) **EP 4 848 817 A1**
(43) Date of publication of application: **02.12.2026**
(21) Application number: 24919340.0
(22) Date of filing: 25.01.2024
(51) Int. Cl.: H04W 36/08

(54) **COMMUNICATION METHOD, DEVICE, COMMUNICATION SYSTEM, AND STORAGE MEDIUM**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Stöckeler, Ferdinand
(86) International application number: PCT/CN2024/074126
(87) International publication number: WO 2025/156231

(57) **Abstract**

A communication method, a device, a communication system, and a storage medium. The method comprises: a first node determining that a cell handover to a first cell is to be performed, and sending first information to a terminal, the first information being used for instructing the terminal to perform the cell handover to the first cell, the first node being a node associated with a serving cell of the terminal, and the serving cell and the first cell corresponding to different nodes. The first node, by means of sending the first information to the terminal, enables the terminal to reliably perform handover to the first cell when the first cell and the serving cell correspond to different nodes.

## Description

### TECHNICAL FIELD

The present disclosure relates to a field of communication technology, and specifically to a communication method, a device, a communication system and a storage medium.

### BACKGROUND

For a handover process of dynamic cells or cell groups, network nodes can control terminals to perform cell handover among multiple candidate cells or cell groups. However, there is currently a lack of effective means for performing cell or cell group handover between nodes.

### SUMMARY

Embodiments of the present disclosure provide a communication method, a device, a communication system, and a storage medium.

According to a first aspect of embodiments of the present disclosure, a communication method is provided, including:
determining, by a first node, to perform a cell handover to a first cell, and sending, by the first node, first information to a terminal, wherein the first information indicates the terminal to perform the cell handover to the first cell, the first node is a node associated with a serving cell of the terminal, and the serving cell and the first cell correspond to different nodes.

According to a second aspect of embodiments of the present disclosure, a communication method is provided, including:
sending, by a second node, second information to a first node, wherein the second information includes timing advance (TA) related information of a first cell, the first node is a node associated with a serving cell of a terminal, the second node is a node associated with the first cell, and the first cell and the serving cell correspond to different nodes.

According to a third aspect of embodiments of the present disclosure, a communication method is provided, including:
receiving, by a terminal, first information sent by a first node, wherein the first node is a node associated with a serving cell of the terminal; and
performing, by the terminal, a cell handover to a first cell according to the first information, wherein the first cell and the serving cell correspond to different nodes.

According to a fourth aspect of embodiments of the present disclosure, a first node is provided, including:
a transceiver module, configured to determine to perform a cell handover to a first cell, and send first information to a terminal, wherein the first information indicates the terminal to perform the cell handover to the first cell, the first node is a node associated with a serving cell of the terminal, and the serving cell and the first cell correspond to different nodes.

According to a fifth aspect of embodiments of the present disclosure, a second node is provided, including:
a transceiver module, configured to send second information to a first node, wherein the second information includes timing advance (TA) related information of a first cell, the first node is a node associated with a serving cell of a terminal, the second node is a node associated with the first cell, and the first cell and the serving cell correspond to different nodes.

According to a sixth aspect of embodiments of the present disclosure, a terminal is provided, including:
a transceiver module, configured to receive first information sent by a first node, wherein the first node is a node associated with a serving cell of the terminal; and
a processing module, configured to perform a cell handover to a first cell according to the first information, where the first cell and the serving cell correspond to different nodes.

According to a seventh aspect of embodiments of the present disclosure, a first node is provided, including:
one or more processors; and
a memory, coupled to the one or more processors, and storing executable instructions, wherein when the executable instructions are executed by the one or more processors, the first node is caused to perform the communication method described in the first aspect.

According to an eighth aspect of embodiments of the present disclosure, a second node is provided, including:
one or more processors; and
a memory, coupled to the one or more processors, and storing executable instructions, wherein when the executable instructions are executed by the one or more processors, the second node is caused to perform the communication method described in the second aspect.

According to a ninth aspect of embodiments of the present disclosure, a terminal is provided, including:
one or more processors; and
a memory, coupled to the one or more processors, and storing executable instructions, wherein when the executable instructions are executed by the one or more processors, the terminal is caused to perform the communication method described in the third aspect.

According to a tenth aspect of embodiments of the present disclosure, a communication system is provided, including a first node, a second node and a terminal, wherein the first node is configured to implement the communication method described in the first aspect, the second node is configured to implement the communication method described in the second aspect, and the terminal is configured to implement the communication method described in the third aspect.

According to an eleventh aspect of embodiments of the present disclosure, a storage medium is provided. The storage medium stores instructions, wherein when the instructions are running on a communication device, the communication device is caused to perform the method described in the first aspect or the second aspect or the third aspect.

According to a twelfth aspect of embodiments of the present disclosure, a computer program product is provided, including a computer program and/or instruction, wherein when the computer program and/or instructions are executed by a communication device, the communication method described in the first aspect or the second aspect or the third aspect is implemented.

In the aforementioned embodiments, the first node can send the first information to the terminal, enabling the terminal to reliably switch to the first cell when the node corresponding to the first cell is different from the node corresponding to the serving cell.

### BRIEF DESCRIPTION OF THE DRAWINGS

In order to provide a clearer explanation of the technical solution in embodiments of the present disclosure, the following drawings are introduced to describe the embodiments. The following drawings are only some embodiments of this disclosure and do not impose specific limitations on the scope of protection of this disclosure.
FIG. 1A is a schematic diagram of an architecture of a communication system according to an embodiment of the present disclosure.
FIG. 1B is a schematic diagram of an architecture of a communication system according to an embodiment of the present disclosure.
FIG. 1C is a schematic diagram of an architecture of a communication system according to an embodiment of the present disclosure.
FIG. 1D is a schematic diagram of a dual-connection architecture according to an embodiment of the present disclosure.
FIG. 2 is a schematic diagram of interaction in a communication method according to an embodiment of the present disclosure.
FIG. 3A is a schematic flowchart of a communication method according to an embodiment of the present disclosure.
FIG. 3B is a schematic flowchart of a communication method according to an embodiment of the present disclosure.
FIG. 3C is a schematic flowchart of a communication method according to an embodiment of the present disclosure.
FIG. 3D is a schematic flowchart of a communication method according to an embodiment of the present disclosure.
FIG. 4A is a schematic flowchart of a communication method according to an embodiment of the present disclosure.
FIG. 4B is a schematic flowchart of a communication method according to an embodiment of the present disclosure.
FIG. 4C is a schematic flowchart of a communication method according to an embodiment of the present disclosure.
FIG. 4D is a schematic flowchart of a communication method according to an embodiment of the present disclosure.
FIG. 5A is a schematic flowchart of a communication method according to an embodiment of the present disclosure.
FIG. 5B is a schematic flowchart of a communication method according to an embodiment of the present disclosure.
FIG. 5C is a schematic flowchart of a communication method according to an embodiment of the present disclosure.
FIG. 6 is a schematic diagram of interaction in a communication method according to an embodiment of the present disclosure.
FIG. 7A is a schematic flowchart of a communication method according to an embodiment of the present disclosure.
FIG. 7B is a schematic flowchart of a communication method according to an embodiment of the present disclosure.
FIG. 7C is a schematic diagram of interaction in a communication method according to an embodiment of the present disclosure.
FIG. 7D is a schematic diagram of interaction in a communication method according to an embodiment of the present disclosure.
FIG. 7E is a schematic diagram of interaction in a communication method according to an embodiment of the present disclosure.
FIG. 7F is a schematic diagram of interaction in a communication method according to an embodiment of the present disclosure.
FIG. 7G is a schematic diagram of interaction in a communication method according to an embodiment of the present disclosure.
FIG. 7H is a schematic diagram of interaction in a communication method according to an embodiment of the present disclosure.
FIG. 8A is a block diagram of a first node according to an embodiment of the present disclosure.
FIG. 8B is a block diagram of a second node according to an embodiment of the present disclosure.
FIG. 8C is a block diagram of a terminal according to an embodiment of the present disclosure.
FIG. 9A is a block diagram of a communication device according to embodiments of the present disclosure.
FIG. 9B is a block diagram of a communication device according to embodiments of the present disclosure.

### DETAILED DESCRIPTION

Embodiments of the present disclosure provide a communication method, a device, a communication system and a storage medium.

In a first aspect, embodiments of the present disclosure provide a communication method, including:
determining, by a first node, to perform a cell handover to a first cell, and sending, by the first node, first information to a terminal, wherein the first information indicates the terminal to perform the cell handover to the first cell, the first node is a node associated with a serving cell of the terminal, and the serving cell and the first cell correspond to different nodes.

In the embodiments above, the first node can send the first information to the terminal, enabling the terminal to reliably switch to the first cell when the node corresponding to the first cell is different from the node corresponding to the serving cell.

In some embodiments of the first aspect, the method further includes:
receiving, by the first node, second information sent by a second node, wherein the second information includes timing advance (TA) related information of the first cell, the first information includes a TA value of the first cell, the TA value of the first cell is determined based on the second information, and the second node is a node associated with the first cell.

In the embodiments above, the second node can send the TA related information to the first node, enabling the first node to transmit the TA value of the first cell to the terminal through the first information. This further ensures the reliability of cell handover for the terminal.

In some embodiments of the first aspect, the first node is a source base station, and the second node is a candidate base station; or the first node is a master node (MN), and the second node is a candidate secondary node (SN); or the first node is a serving SN, and the second node is a candidate SN.

In some embodiments of the first aspect, the TA related information of the first cell includes at least one of the following corresponding to the first cell: an identifier of the first cell, a TA value, a preamble, a random access radio network temporary identifier (RA-RNTI), or an identifier of the second node.

In the embodiments above, configuring the TA related information to include one or more of the aforementioned elements can enable the terminal or the first node to more accurately obtain the TA value corresponding to the first cell, thereby enhancing the efficiency and reliability of cell handover performed by the terminal.

In some embodiments of the first aspect, the first node is a source base station and the second node is a candidate base station, or the first node is an MN and the second node is a candidate SN,
the second information is determined and sent by the second node according to third information, the third information is sent by the terminal, and the third information includes a random access (RA) preamble.

In the embodiments above, when the first node is an MN or a base station, the second node can directly send the second information to the first node, thereby enabling the first node to determine the TA related information corresponding to each candidate cell based on the second information.

In some embodiments of the first aspect, the first node is a serving SN and the second node is a candidate SN, and receiving, by the first node, the second information sent by the second node includes:
receiving, by the first node, the second information sent by an MN, wherein the second information is determined and sent by the second node to the MN according to third information, the third information is sent by the terminal, and the third information includes an RA preamble.

In the embodiments above, when the first node serves as the serving SN, the second node can forward the second information to the first node via the MN, ensuring that the first node can reliably receive the second information.

In some embodiments of the first aspect, the third information is sent by the terminal using a first random access channel (RACH) resource, and the first RACH resource is used for early synchronization between the first cell and the terminal.

In the embodiments above, the first RACH resource can be utilized for early synchronization, enabling the terminal to acquire the TA value of the first cell prior to cell handover, thereby effectively enhancing the efficiency of cell handover.

In some embodiments of the first aspect, the method further includes:
sending, by the first node, fourth information to a second node, wherein the fourth information indicates the second node to determine a first RACH resource, the second node is a node associated with the first cell, and the first RACH resource is used for early synchronization between the first cell and the terminal; and
receiving, by the first node, fifth information sent by the second node, wherein the fifth information indicates the first RACH resource.

In the embodiments above, the second node can determine the first RACH resource corresponding to the first cell in response to the fourth information, thereby enabling the first cell and the terminal to perform early synchronization based on the first RACH resource, which can effectively improve the efficiency of cell handover.

In some embodiments of the first aspect, the method further includes:
sending, by the first node, eighth information to the terminal, wherein the eighth information indicates the first RACH resource.

In the embodiments above, after receiving the determined first RACH resource from the second terminal, the first node can send the first RACH resource to the terminal through the eighth information. Subsequently, the terminal can perform early synchronization with the first cell based on the first RACH resource, thereby enhancing the efficiency of cell handover.

In some embodiments of the first aspect, the fourth information includes a first configuration list, the first configuration list indicates a second RACH resource that has been configured by the first node, the second RACH resource is used for early synchronization between at least one second cell and the terminal, the fourth information indicates the second node to determine the first RACH resource based on the second RACH resource;
and/or, the method further includes:
sending, by the first node, sixth information to the second node, wherein the sixth information includes the first configuration list and indicates the second node to update the first RACH resource according to the second RACH resource.

In the embodiments above, the first configuration list can be carried through the fourth information or the sixth information, ensuring that there is no conflict between the RACH resource corresponding to the first cell determined by the second node and the already configured RACH resource, thereby guaranteeing the reliability of early synchronization.

In some embodiments of the first aspect, sending, by the first node, the sixth information to the second node includes: determining, by the first node that there is a conflict between the first RACH resource and the second RACH resource, and sending, by the first node, the sixth information to the second node.

In the embodiments above, the first node may only send the sixth information to the second node when it determines that there is a conflict between the first RACH resource and the already configured RACH resource. This can effectively reduce resource overhead while avoiding RACH resource conflicts.

In some embodiments of the first aspect, the method further includes: receiving, by the first node, seventh information sent by the second node, where the seventh information indicates updated first RACH resource.

In some embodiments of the first aspect, the first configuration list includes at least one of: a node identifier of a third node, wherein the third node is a node associated with the second cell; a cell identifier of the second cell; a configuration identifier corresponding to the second cell; or a configuration of an RACH resource corresponding to the configuration identifier.

In the embodiments above, configuring the first configuration list to include at least one of the aforementioned information allows the second node to accurately determine the relevant information of the already configured RACH resource based on the first configuration list, thereby avoiding conflicts between the first RACH resource and the second RACH resource.

In a second aspect, embodiments of the present disclosure provide a communication method, including:
sending, by a second node, second information to a first node, wherein the second information includes timing advance (TA) related information of a first cell, the first node is a node associated with a serving cell of a terminal, the second node is a node associated with the first cell, and the first cell and the serving cell correspond to different nodes.

In some embodiments of the second aspect, the first node is a source base station, and the second node is a candidate base station; or
the first node is a master node (MN), and the second node is a candidate secondary node (SN); or
the first node is a serving SN, and the second node is a candidate SN.

In some embodiments of the second aspect, the TA related information of the first cell includes at least one of the following corresponding to the first cell: an identifier of the first cell, a TA value, a preamble, a random access radio network temporary identifier (RA-RNTI), or an identifier of the second node.

In some embodiments of the second aspect, the first node is a source gNB and the second node is a candidate gNB, or the first node is an MN and the second node is a candidate SN,
sending, by the second node, the second information to the first node includes:
receiving, by the second node, third information sent by the terminal, wherein the third information includes a random access (RA) preamble; and
determining and sending, by the second node, the second information to the first node according to the third information.

In some embodiments of the second aspect, the first node is a serving SN and the second node is a candidate SN,
sending, by the second node, the second information to the first node includes:
sending, by the second node, the second information to the first node via an MN, wherein the second information is determined by the second node according to third information, the third information is sent by the terminal, and the third information includes an RA preamble.

In some embodiments of the second aspect, the third information is sent by the terminal using a first random access channel (RACH) resource, and the first RACH resource is used for early synchronization between the first cell and the terminal.

In some embodiments of the second aspect, the method further includes:
receiving, by the second node, fourth information sent by the first node;
determining, by the second node, a first RACH resource, wherein the first RACH resource is used for early synchronization between the first cell and the terminal; and
sending, by the second node, fifth information to the first node, wherein the fifth information indicates the first RACH resource.

In some embodiments of the second aspect, the fourth information includes a first configuration list, the first configuration list indicates a second RACH resource that has been configured by the first node, the second RACH resource is used for early synchronization between at least one second cell and the terminal, the fourth information indicates the second node to determine the first RACH resource based on the second RACH resource;
and/or, determining, by the second node, the first RACH resource comprises: receiving, by the second node, sixth information sent by the first node, wherein the sixth information comprises the first configuration list; and updating, by the second node, the first RACH resource according to the second RACH resource.

In some embodiments of the second aspect, the method further includes:
sending, by the second node, seventh information to the first node, wherein the seventh information indicates the updated first RACH resource.

In some embodiments of the second aspect, the first configuration list includes at least one of:
a node identifier of a third node, wherein the third node is a node associated with the second cell;
a cell identifier of the second cell;
a configuration identifier corresponding to the second cell; or
a configuration of an RACH resource corresponding to the configuration identifier.

In a third aspect, embodiments of the present disclosure provide a communication method, including:
receiving, by a terminal, first information sent by a first node, wherein the first node is a node associated with a serving cell of the terminal; and
performing, by the terminal, a cell handover to a first cell according to the first information, wherein the first cell and the serving cell correspond to different nodes.

In some embodiments of the third aspect, the method further includes:
performing, by the terminal, the cell handover to the first cell according to a timing advance (TA) value of the first cell in the first information, wherein the TA value of the first cell is determined by the first node according to second information, the second information is sent by a second node, the second information includes TA related information of the first cell, and the second node is a node associated with the first cell.

In some embodiments of the third aspect, the first node is a source base station, and the second node is a candidate base station; or
the first node is a master node (MN), and the second node is a candidate secondary node (SN); or
the first node is a serving SN, and the second node is a candidate SN.

In some embodiments of the third aspect, the TA related information of the first cell includes at least one of the following corresponding to the first cell: an identifier of the first cell; a TA value; a preamble; a random access radio network temporary identifier (RA-RNTI), or an identifier of the second node.

In some embodiments of the third aspect, the method further includes:
sending, by the terminal, third information to the second node, wherein the third information is used by the second node to determine the second information, and the third information includes a random access (RA) preamble.

In some embodiments of the third aspect, the third information is sent by the terminal using a first random access channel (RACH) resource, and the first RACH resource is used for early synchronization between the first cell and the terminal.

In some embodiments of the third aspect, the method further includes:
receiving, by the terminal, eighth information sent by the first node, wherein the eighth information indicates a first RACH resource, and the first RACH resource is used for early synchronization between the first cell and the terminal.

In a fourth aspect, embodiments of the present disclosure provide a first node, including:
a transceiver module, configured to determine to perform a cell handover to a first cell, and send first information to a terminal, wherein the first information indicates the terminal to perform the cell handover to the first cell, the first node is a node associated with a serving cell of the terminal, and the serving cell and the first cell correspond to different nodes.

In a fifth aspect, embodiments of the present disclosure provide a second node, including:
a transceiver module, configured to send second information to a first node, wherein the second information includes timing advance (TA) related information of a first cell, the first node is a node associated with a serving cell of a terminal, the second node is a node associated with the first cell, and the first cell and the serving cell correspond to different nodes.

In a sixth aspect, embodiments of the present disclosure provide a terminal, including:
a transceiver module, configured to receive first information sent by a first node, wherein the first node is a node associated with a serving cell of the terminal; and
a processing module, configured to perform a cell handover to a first cell according to the first information, where the first cell and the serving cell correspond to different nodes.

In a seventh aspect, embodiments of the present disclosure provide a first node, including:
one or more processors; and
a memory, coupled to the one or more processors, and storing executable instructions, wherein when the executable instructions are executed by the one or more processors, the first node is caused to perform the communication method described in the first aspect.

In an eighth aspect, embodiments of the present disclosure provide a second node, including:
one or more processors; and
a memory, coupled to the one or more processors, and storing executable instructions, wherein when the executable instructions are executed by the one or more processors, the second node is caused to perform the communication method described in the second aspect.

In a ninth aspect, embodiments of the present disclosure provide a terminal, including:
one or more processors; and
a memory, coupled to the one or more processors, and storing executable instructions, wherein when the executable instructions are executed by the one or more processors, the terminal is caused to perform the communication method described in the third aspect.

In a tenth aspect, embodiments of the present disclosure provide a communication system, including a first node, a second node and a terminal, wherein the first node is configured to implement the communication method described in the first aspect, the second node is configured to implement the communication method described in the second aspect, and the terminal is configured to implement the communication method described in the third aspect.

In an eleventh aspect, embodiments of the present disclosure provide a storage medium. The storage medium stores instructions, wherein when the instructions are running on a communication device, the communication device is caused to perform the communication method described in the first aspect or the second aspect or the third aspect.

In a twelfth aspect, embodiments of the present disclosure provide a computer program that, when running on a computer, causes the computer to perform the method described in optional implementations of the first aspect, or the second aspect.

In a thirteenth aspect, embodiments of the present disclosure provide a chip or a chip system, including a processing circuit, configured to perform the method described in optional implementations of the first aspect, or the second aspect.

In a fourteenth aspect, embodiments of the present disclosure provide a computer program product, including a computer program and/or instruction, wherein when the computer program and/or instructions are executed by a communication device, the communication method described in the first aspect or the second aspect or the third aspect is implemented.

It may be understood that the first node, the second node, the terminal, the communication system, the storage medium, the program product, the computer program and the chip or chip system are all configured to perform the methods in embodiments of the present disclosure. Therefore, for achievable beneficial effects, reference may be made to the beneficial effects in the corresponding method, which are not repeated here.

Embodiments of the present disclosure provide a communication method, a first node, a second node, a terminal, a communication system, and a storage medium. In some embodiments, terms such as communication method and information processing method, data transmission method, and cell handover method can be interchanged with each other, terms such as communication device and information processing device, data transmission device, and cell handover device can be interchanged with each other, and terms such as communication system and information processing system can be interchanged with each other.

Embodiments of the present disclosure are not exhaustive and only serve as illustrations of some embodiments, but not as specific limitations on the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in embodiments of the present disclosure are for a purpose of describing specific embodiments only and are not intended to limit the present disclosure.

In embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In embodiments of the present disclosure, "a plurality of" means two or more.

In some embodiments, the terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of the following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include the following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The prefixes such as "first" and "second" in embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, terms such as "time/frequency" and "time/frequency domain" refer to time domain and/or frequency domain.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and the device, etc. may be interpreted as physical or virtual, and their names are not limited to the names recorded in embodiments. The terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as a device (e.g., access network device, core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc. may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, the access network device, core network device, or network device may be replaced with a terminal. For instance, the embodiments of the present disclosure can also be applied to structures where the communication between the access network device, core network device, or network device and the terminal is replaced with communication between multiple terminals (e.g., device-to-device (D2D), vehicle-to-everything (V2X), etc.). In this case, the terminal may also be configured to have all or part of the functions of the access network device. Furthermore, terms such as "uplink" and "downlink" may also be replaced with terms corresponding to communication between terminals (e.g., "side"). For example, uplink channels, downlink channels, etc. may be replaced with side channels, and uplink links, downlink links, etc. may be replaced with side links.

In some embodiments, the terminal may be replaced by an access network device, a core network device, or a network device. In this case, it may also be configured such that the access network device, core network device, or network device has all or part of the functions possessed by the terminal.

In some embodiments, the acquisition of data, information, etc. may comply with laws and regulations of the country to which the data is obtained.

In some embodiments, data, information, etc. may be obtained with consent from users.

In addition, each element, each row, or each column in the table of embodiments of the disclosure may be implemented as an independent embodiment, and the combination of any elements, any rows, or any columns may also be implemented as an independent embodiment.

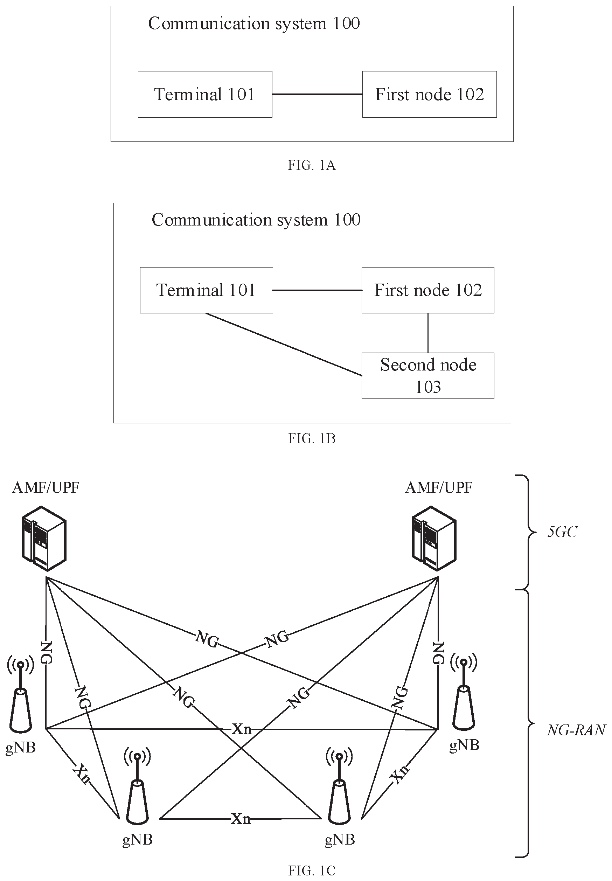

FIG. 1A is a schematic diagram of an architecture of a communication system according to an embodiment of the present disclosure. As shown in FIG. 1A, a communication system 100 includes a terminal 101 and a first node 102. Optionally, the first node 102 may be an access network device. Optionally, the terminal may access the core network or core network device through the first node 102.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the access network device is, for example, a node or device that connects the terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, or an access node in a wireless fidelity (Wi-Fi) system, which is not limited herein.

In some embodiments, the technical solution of embodiments of the present disclosure can be applied to the Open-RAN architecture. In this case, the interfaces between or within network devices involved in embodiments of the present disclosure can become internal interfaces of the Open-RAN, and the flow and information exchange between these internal interfaces can be implemented through software or programs.

In some embodiments, the access network device may be composed of a central unit (CU) and distributed units (DUs), where CU may also be described as a control unit. The CU-DU structure can be used to split the protocol layer of the network device, with some protocol layer functions centrally controlled by CU and the remaining or all protocol layer functions distributed in DUs, which are centrally controlled by CU, but not limited to this.

In some embodiments, the core network device may be a device, including one or more network elements, or may be a plurality of devices or a device group, each including all or part of the first network element, the second network element, etc. The network element may be virtual or physical. The core network includes, for example, at least one of an evolved packet core (EPC), a 5G core network (5GCN), or a next generation core (NGC).

FIG. 1B illustrates an architecture of a communication system according to an embodiment of the present disclosure. As shown in FIG. 1B, the communication system 100 includes a terminal 101 and a first node 102, and may further include a second node 103. Optionally, the second node 103 may also be an access network device. Optionally, the terminal may access a core network or a core network device through the first node 103. Optionally, the first node 102 and the second node 103 may correspond to different centralized units.

In some embodiments, Multi-Radio Dual Connectivity (MR-DC) is a generalized Intra-E-UTRA dual connectivity, where the terminal 101 can utilize radio resources provided by two different schedules located on two distinct Next Generation Radio Access Network (NG-RAN) nodes, such as the first node 102 and the second node 103, through non-ideal backhaul connections, one of which provides New Radio (NR) access, while the other provides Evolved Universal Terrestrial Radio Access (E-UTRA) or NR access. One serves as a Master Node (MN), and the other as a Serving Node (SN). The MN and SN are connected through a network interface, with at least the MN connected to the core network.

FIG. 1C illustrates an NR-DC architecture according to an embodiment of the present disclosure. As shown in FIG. 1C, NG-RAN supports NR-NR DC (NR-DC), where the UE connects to one gNB acting as an MN and another gNB acting as an SN. The master gNB is connected to 5GC via the NG interface, and the two gNBs are connected via the Xn interface. The secondary gNB may also be connected to 5GC via the NG-U interface. In addition, NR-DC may also be used for the UE to access to a single gNB, acting as both an MN and an SN, and configured with both MCG and SCG.

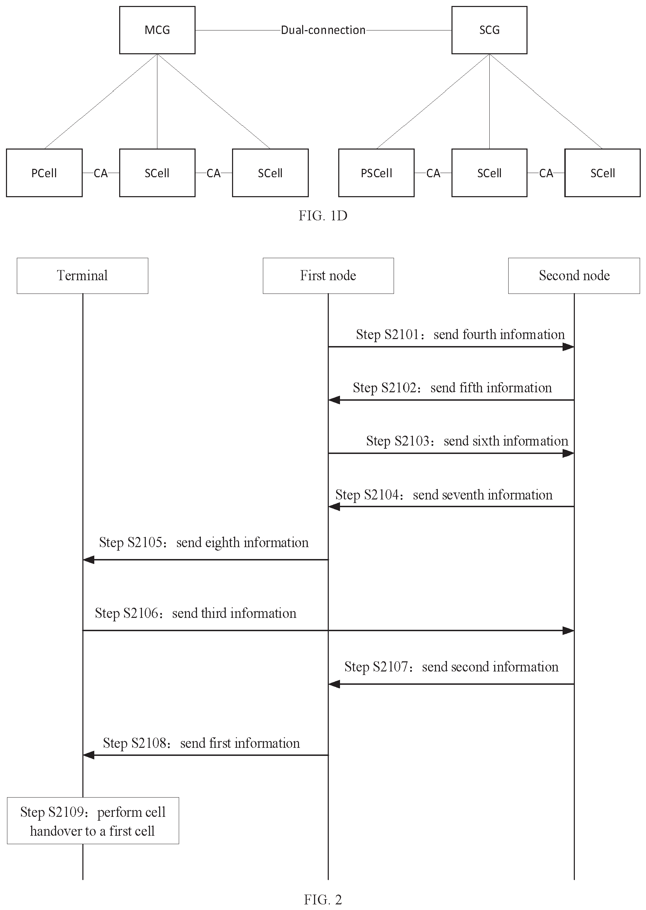

In some embodiments, under dual-connectivity, a UE, such as the terminal 101, can access two cell groups, namely the Master Cell Group (MCG) and the Secondary Cell Group (SCG). FIG. 1D illustrates a dual-connection architecture according to an embodiment of the present disclosure. As shown in FIG. 1D, there may be multiple cells under the MCG, including one cell used for initiating initial access, which is referred to as the Primary Cell (PCell). The PCell under the MCG and the Secondary Cell (SCell) under the MCG are jointly connected through carrier aggregation (CA). In the MCG, the Primary Cell is the PCell and the Secondary Cell is the SCell; in the SCG, the Primary Secondary Cell is the PSCell and the Secondary Cell is the SCell. This is because many signaling is only sent on the PCell and PSCell.

It may be understood that the communication system described in embodiments of the present disclosure is intended to more clearly illustrate the technical solution of embodiments of the present disclosure and does not constitute a limitation on the technical solution disclosed in embodiments of the present disclosure. Those skilled in the art will appreciate that, with the evolution of system architecture and the emergence of new business scenarios, the technical solution disclosed in embodiments of the present disclosure is also applicable to similar technical problems.

The following embodiments of the present disclosure can be applied to the communication system 100 or part of the entities shown in FIGs 1A, 1B, 1C, and 1D, but are not limited thereto. Entities in FIGs 1A, 1B, 1C, and 1D are illustrative. The communication system may include all or some of the entities in FIGs 1A, 1B, 1C, and 1D, or may include other entities not shown in FIGs 1A, 1B, 1C, and 1D. The entities may be in any number and in any form. Each entity may be physical or virtual. Connection relationships between the entities are illustrative. The entities may be unconnected or may be connected. They may be connected in any manner, for example, they may be directly connected or indirectly connected, or may be connected via a wired or wireless way.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., a combination of LTE or LTE-A with 5G) may also be applied.

In some embodiments, Layer 1/Layer 2 Triggered Mobility (LTM) refers to a process where the network triggers a cell switch in PCell/PSCell based on L1/L2 measurement results through MAC CE, which may be accompanied by changes in MCG/SCG. LTM can be used to reduce mobility latency.

In some embodiments, the gNB receives an L1 measurement report from the UE. Based on this, the gNB changes the serving cell of the UE through a cell switch command sent via MAC CE. Optionally, the cell switch command indicates an LTM candidate cell configuration that the gNB provided to the UE in advance through RRC signaling. The UE accesses the target cell indicated in the cell switch command according to the received cell switch command.

In some embodiments, mobility operations in a dual-connection scenario may include MCG mobility operations and/or SCG mobility operations.

The MCG mobility operation may include at least one of PCell change, SCell change, SCell addition, SCell deletion, or MCG change. The PCell change may also be referred to as handover.

The SCG mobility operation may include at least one of PSCell change, PSCell addition, PSCell deletion, SCell change, SCell addition, SCell deletion, SCG change, SCG addition, or SCG deletion.

In some embodiments, MCG mobility operations and SCG mobility operations may be executed independently or concurrently. For instance, PSCell change may be triggered separately, or PSCell addition may be triggered separately, or both PCell change and PSCell change may be triggered simultaneously, or both PCell change and PSCell addition may be triggered simultaneously, or PCell change, SCell change in MCG, PSCell change, and SCell change in SCG may be triggered simultaneously, or other individual or combined scenarios can be employed.

Optionally, terms such as "mobility operation", "mobility", "Cell Switch", "Cell Group Switch", "Serving Cell Switch", and "Handover" may be substituted for each other.

In some embodiments, the aforementioned mobility operations in dual-connection scenarios may be triggered through LTM or other mobility methods, which is not limited in this disclosure.

In some embodiments of the present disclosure, the communication system can support mobility operations. For example, the access network device may configure one or more mobility configuration identifiers corresponding to the mobility operations for the terminal. The mobility configuration identifier is used to indicate the mobility configuration information corresponding to the mobility operation executed by the terminal.

A mobility configuration identifier may correspond to a candidate cell. For instance, a mobility configuration identifier may correspond to the cell identifier of a candidate cell, which may be a Physical Cell Identifier (PCI) and/or a Cell Global Identifier (CGI). The candidate cell may be the cell measured by the terminal. Based on the measurement results of the candidate cell, the terminal may determine the target cell from one or multiple candidate cells and trigger the mobility operation corresponding to the target cell (such as cell change or cell addition).

A mobility configuration identifier may also correspond to the mobility configuration information of a candidate cell.

In some embodiments, the access network device may configure configuration information for the terminal used for mobility operations, and this configuration information may include at least one of:
mobility reference configuration information;
mobility configuration information corresponding to one or more candidate cells; or
channel State Information (CSI) resource configuration, such as LTM CSI resource configuration information.

Alternatively, the configuration information may be configured through LTM-Config.

In some embodiments, the mobility reference configuration information may be configured by the access network device to the terminal. This mobility reference configuration information may be common to various cells within the same cell group (e.g., within a single MCG or a single SCG), and this cell group may be a candidate cell group.

In some embodiments, the mobility configuration information corresponding to a candidate cell may include:
a mobility configuration identifier;
a cell identifier of the candidate cell;
candidate configuration information, which may be represented through RRCReconfiguration.

In an implementation, the candidate configuration information may be the configuration in the RRC reconfiguration message associated with the candidate cell.

For example, the candidate configuration may be incremental configuration information relative to the mobility reference configuration information. In this way, each cell only needs to configure the incremental configuration corresponding to it, thereby reducing the amount of information that each cell needs to configure and reducing the consumption of wireless resources by air interface signaling.

For another example, the candidate configuration information may be complete configuration information, including mobility reference configuration information and incremental configuration information.

In some embodiments, the mobility configuration information corresponding to the candidate cell may be configured for the terminal by the access network device through RRC signaling. This configuration may include at least one of addition, modification, or release.

Based on the aforementioned configuration information, the terminal can determine the cell identifier of the candidate cell corresponding to the mobility configuration identifier, and can also determine the corresponding mobility configuration identifier through the cell identifier of the candidate cell.

In some embodiments, the aforementioned candidate cell may be a candidate primary cell (PCell), a candidate primary secondary cell (PSCell), or a candidate secondary cell (SCell).

In some embodiments, the aforementioned candidate cell group may be either a candidate master cell group (MCG) or a candidate secondary cell group (SCG).

In some embodiments, the aforementioned mobility operation may be a mobility operation based on LTM, the aforementioned configuration information for mobility operation may be configuration information for LTM, the aforementioned mobility configuration identifier may be an LTM configuration identifier, and the aforementioned mobility configuration information corresponding to the candidate cell may be LTM configuration information corresponding to the candidate cell. This LTM configuration information may be configured through the LTM-Candidate information element. For example, the addition, modification, or deletion of candidate cell configuration may be performed through ltm-CandidateToReleaseList and ltm-CandidateToAddModList.

In some embodiments, the terminal may measure the candidate cell based on the aforementioned mobility configuration information to obtain measurement results for the candidate cell. For example, in LTM-based mobility operations, the terminal performs L1 measurements on the candidate cell and may obtain at least one of the following measurement results: Layer 1 Reference Signal Receiving Power (L1-RSRP), Layer 1 Signal to Interference plus Noise Ratio (L1-SINR), or Layer 1 Reference Signal Receiving Quality (L1-RSRQ).

In some embodiments, the terminal can send measurement results to the access network device, and the access network device can send a first indication to the terminal based on the measurement results. This first indication may be used to indicate the terminal to perform mobility operations.

Optionally, the name of the first indication is not limited, and may be, for example, "Mobility Operation Indication", "Mobility Operation Command", "Cell Switch Command", "Cell Change Command", "Cell Addition Command", "Cell Deletion Command", "Cell Change Indication", "Cell Modification Indication", "Cell Addition Indication", "Cell Deletion Indication", etc.

In an implementation, the first indication may indicate a mobility configuration identifier that an access network device has previously provided to the terminal through RRC signaling. The terminal determines the mobility configuration identifier based on the received first indication and accesses the candidate cell corresponding to the mobility configuration identifier.

In another implementation, the first indication may indicate the cell identifier of a candidate cell, and the terminal may access the candidate cell corresponding to the cell identifier.

In some embodiments, the access network device may send the aforementioned first indication through L1 signaling or L2 signaling. The L1 signaling may include Downlink Control Information (DCI) or other L1 signaling, while the L2 signaling may include Medium Access Control-Control Element (MAC CE) or other L2 signaling.

In some embodiments, the communication system may also support Subsequent LTM, which refers to the subsequent LTM cell handover process between candidate cells without requiring RRC reconfiguration by the access network device. That is to say, after performing mobility operations (such as cell handover), the terminal will not autonomously delete the LTM configuration. This LTM configuration can continue to be used even without RRC reconfiguration and update, and is used to trigger subsequent LTM.

In some embodiments, scenarios of LTM-based mobility operations may include at least one of:
Intra-DU mobility operations, involving cell change, addition, or deletion within the same DU, where the target cell and the source cell belong to the same DU;
Inter-DU mobility operations, involving cell change, addition, or deletion between different DUs, where the target cell and the source cell belong to different DUs;
Intra-CU mobility operations, involving cell change, addition, or deletion within the same CU, where the target cell and the source cell belong to the same CU;
Inter-CU mobility operations, involving cell change, addition, or deletion between different CUs, where the target cell and the source cell belong to different CUs.

In some embodiments, the aforementioned inter-CU may also be referred to as inter-node, inter-gNB, or inter-access network device, where the target cell and the source cell belong to different access network devices (nodes, base stations).

In some embodiments, the aforementioned intra-CU mobility operation scenarios may include inter-DU mobility operations within the CU and/or intra-DU mobility operations.

In some embodiments, during the SCG PSCell cell change triggered by inter-CU LTM, the access network device acting as the MN may participate, and the MN may be used to coordinate the configuration between candidate PSCells of different CUs.

In some embodiments, based on the correspondence between different cells and the access network device, the mobility operations in the dual-connection scenario may include at least one of:
intra-MN MCG mobility operations; inter-MN MCG mobility operations; intra-SN SCG mobility operations; inter-SN SCG mobility operations; or inter-Node MCG mobility operations and SCG mobility operations.

In some embodiments, mobility operations in dual-connectivity scenarios (such as mobility operations based on LTM) may be triggered by at least one of the MN, the SN, or the terminal.

In some embodiments, for the intra-SN SCG mobility operation, the mobility configuration information corresponding to the SCG mobility operation (such as LTM configuration information) may be directly sent to the terminal by the SN, or transparently transmitted to the terminal by the SN through the MN.

Optionally, the LTM-based intra-SN SCG mobility operation may be performed without the participation of the MN. After the terminal performs cell change, it may send the RRC reconfiguration complete message to the SN. For example, the RRC reconfiguration complete message may be sent to the SN directly through SRB3 or through transparent transmission by the MN.

In other embodiments, for the scenario of the inter-SN SCG mobility operation or the inter-Node MCG mobility operation and SCG mobility operation, the participation of the MN is required to achieve PScell change or addition between nodes. The MN needs to exchange information with the source SN and the candidate SN. In this scenario, the LTM configuration may be configured to the terminal through the MN. After the terminal performs a cell change, it may send an MN RRC reconfiguration complete message carrying the SN RRC reconfiguration complete message to the MN, and then the MN may forward the SN RRC reconfiguration complete message to the target SN.

Optionally, the aforementioned MN RRC reconfiguration complete message may be referred to as the first message or the first RRC reconfiguration complete message, and the aforementioned SN RRC reconfiguration complete message may be referred to as the second message or the second RRC reconfiguration complete message.

In some embodiments, the UE may send a RA preamble to a candidate cell. Based on the received preamble, the candidate cell obtains the TA corresponding to the UE in this candidate cell. This TA value will be included in the Cell Switch Command sent by the serving cell to the UE. Upon receiving the Cell Switch Command containing the TA, the UE can trigger RACH-less LTM.

In some embodiments, for the random access process of the LTM candidate cell used for early TA acquisition, Contention Free Random Access (CFRA) triggered by the PDCCH command may be employed. For instance, the terminal sends MSG1 to the cell but does not monitor the cell's response. Optionally, to support terminal power enhancement, the terminal may perform MSG1 retransmission according to the network indication.

In some embodiments, the intra-CU mobility operation can support early TA acquisition. During the execution of LTM, the terminal performs early TA acquisition on candidate cells according to network requirements before receiving a cell handover command. This process can be completed by triggering CFRA through a PDCCH command from the source cell, after which the terminal can send a preamble to the designated candidate cell. To minimize data interruption caused by the source cell sending CFRA to the candidate cell, the terminal does not receive a random access response from the network when acquiring the TA value. The TA value of the candidate cell may be carried by the cell handover command.

In some embodiments, for intra-CU gNB LTM, the serving cell and the target cell are located on the same gNB, thus eliminating the need for node-to-node interaction to facilitate the transmission of TA information. However, in scenarios where the serving cell and the candidate cell are located on different gNBs, ensuring reliable cell handover in the network remains an urgent issue to be addressed.

FIG. 2 is a schematic diagram illustrating interaction in a communication method according to an embodiment of the present disclosure. As shown in FIG. 2, this embodiment of the present disclosure relates to a communication method, and the method includes the following steps.

Step S2101: a first node sends fourth information to a second node.

In some embodiments, the first node is a node associated with a serving cell of a terminal. The terminal may access the serving cell through the first node. Optionally, the first node may also be referred to as a serving node.

In some embodiments, the second node is a node associated with a first cell. When the terminal receives a relevant indication from the first node or when the terminal determines that a corresponding event has been triggered, the terminal may access the first cell through the second node, thereby using the first cell as its serving cell. Optionally, the second node may also be referred to as a candidate node, and the first cell may also be referred to as a candidate cell.

In some embodiments, the number of candidate nodes may be greater than or equal to 2, and the number of candidate cells may be greater than or equal to 2. Optionally, the second node may be a node associated with one or more candidate cells, and the first cell may include one or more candidate cells associated with the second node.

For example, the second node may be any one of the candidate nodes, and the first cell may include one or more candidate cells corresponding to the second node. Alternatively, the first cell may be any one of the candidate cells, and the second node may be the node corresponding to the first cell.

In some embodiments, the first node is a source base station, and the second node is a candidate base station; or the first node is a master node (MN), and the second node is a candidate secondary node (SN); or the first node is a serving SN, and the second node is a candidate SN.

In some embodiments, the first cell and the serving cell correspond to different nodes. Optionally, the first cell and the serving cell correspond to different nodes (such as base stations) or centralized units (CUs). That is to say, the terminal may perform cell handover between nodes, between base stations, or between CUs.

In some embodiments, when the first node is the source base station or MN, the corresponding cell handover may be referred to as MCG LTM. Optionally, when the first node is the MN or serving SN, the corresponding cell handover may be referred to as SCG LTM. Optionally, when the first node is the MN, the corresponding cell handover may be referred to as MN initiated SCG LTM. Optionally, when the first node is the serving SN, the corresponding cell handover may be referred to as SN initiated SCG LTM.

In some embodiments, MCG LTM is used to trigger the mobility of MCG and/or PCell.

In some embodiments, SCG LTM is used to trigger the mobility of SCG and/or PSCell.

In some embodiments, the first node sends the fourth information to each of the candidate nodes.

In some embodiments, the fourth information indicates the second node to determine a first RACH resource. Optionally, the first RACH resource is used for early synchronization between the first cell and the terminal.

In some embodiments, the second node is a node associated with one or more candidate cells, and the fourth information indicates the second node to determine the RACH resources corresponding to each candidate cell associated with the second node.

In some embodiments, the fourth information includes information used for requesting early synchronization. Optionally, the fourth information is used for the second node to determine whether to prepare corresponding first RACH resource for early synchronization for the first cell. For example, when the fourth information indicates "True" or a specific value, or has been configured, it may indicate that the first node requests the second node to prepare corresponding RACH resource for early synchronization for the first cell.

In some embodiments, the fourth information may include a first configuration list. Optionally, the first configuration list indicates a second RACH resource that has been configured by the first node. Optionally, the fourth information indicates the second node to determine the first RACH resource based on the second RACH resource. Optionally, the second RACH resource is used for at least one second cell to perform early synchronization with the terminal.

In some embodiments, the node associated with the second cell may be referred to as a third node. Optionally, the third node is the node associated with the second cell. That is to say, the terminal may access the second cell through the third node.

In some embodiments, both the first cell and the second cell may be referred to as candidate cells, and both the third node and the second node may be referred to as candidate nodes. It can be understood that the second cell may be one or more cells among the candidate cells that are different from the first cell, and the third node may be one or more nodes among the candidate nodes that are different from the second node.

In some embodiments, before the first node sends the fourth information to the second node, the first node may receive fifth information sent by the third node and determine the first configuration list, wherein the fifth information sent by the third node may indicate the second RACH resource.

The first node may send the fourth information to the second node after determining the configuration of the RACH resource corresponding to the second cell, for example, after receiving the fifth information sent by the third node. The fourth information sent to the second node includes the first configuration list, which can prevent conflicts between the first RACH resource and the second RACH resource when the second node determines the first RACH resource.

In some embodiments, the first configuration list includes at least one of: a node identifier of the third node; a cell identifier of the second cell; a configuration identifier corresponding to the second cell; or a configuration of the RACH resource corresponding to the configuration identifier.

For example, the second node may determine one or more second cells corresponding to one or more third nodes based on the first configuration list, and determine the configuration identifiers corresponding to each of the one or more second cells, thereby determining the RACH resource configurations corresponding to each second cell, such as the starting and ending time-frequency domain positions of the RACH resources. Furthermore, when determining the first RACH resources, the second node can avoid the RACH resources corresponding to the second cells already configured by the first node, thereby preventing different candidate nodes from generating the same RACH resources for Early Sync for their corresponding different cells.

That is to say, the first node may include in the fourth information sent to any candidate node, a configuration list of Early Sync resources configured for candidate cells corresponding to candidate nodes other than this candidate node. In this way, when the candidate node determines the corresponding RACH resource, it can avoid conflicts with already configured resources.

In some embodiments, the fourth information may be an Xn message, or an inter-node Radio Resource Control (RRC) message, or carried by an Xn message, or carried by an inter-node RRC message.

In some embodiments, the second message may be a "Handover Request message", "SN Addition Request message", or any other Xn message used to request LTM. The name of the fourth message is not limited in embodiments of the present disclosure.

In some embodiments, the second node receives the fourth information. Optionally, the second node executes step S2102 in response to the fourth information. Optionally, after receiving the fourth information, the second node determines whether to execute step S2102 based on the fourth information.

Step S2102: The second node sends fifth information to the first node.

In some embodiments, the fifth information indicates the first RACH resource. Alternatively, the fifth information indicates the first RACH resource determined by the second node.

In some embodiments, the fifth information may be determined by the second node based on the first configuration list in the fourth information. For instance, the second node determines the first RACH resource and the corresponding fifth information according to the first configuration list, wherein the first RACH resource does not conflict with the second RACH resource. For example, the time-frequency domain location corresponding to the first RACH resource does not overlap with the time-frequency domain location corresponding to the second RACH resource.

In some embodiments, the fifth information may be an acknowledgement message for the fourth information. Optionally, the fifth information may be an Xn message, or an inter-node Radio Resource Control (RRC) message, or carried by an Xn message, or carried by an inter-node RRC message. Optionally, the fifth information may also be an "EarlyUL-SyncConfig Information Element (IE)", or carried by the "EarlyUL-SyncConfig IE".

In some embodiments, the fifth information may be a "Handover Request Acknowledge message" or a "SN Addition Request Acknowledge message", or any other acknowledgement message for requesting LTM. Alternatively, the fifth information may also be "Handover Preparation" information or a "Handover Command". The name of the fifth information is not limited in the embodiments of the present disclosure.

In some embodiments, the first node receives the fifth information from the second node. Optionally, the first node updates the configured second RACH resource based on the received fifth information, for example, by adding the first RACH resource indicated by the second node to the second RACH resource. Optionally, the first node updates the first configuration list based on the received fifth information.

In some embodiments, the first node executes step S2103 or step S2105 in response to receiving the fifth information. Optionally, the first node determines whether to execute step S2103 based on the received fifth information.

For example, after the first node receives the fifth information, if it is determined that there is a conflict between the first RACH resource and the second RACH resource, step S2103 and subsequent steps can be executed. If it is determined that there is no conflict between the first RACH resource and the second RACH resource, step S2105 and subsequent steps can be executed.

In some embodiments, steps S2103 and S2104 are optional steps, and the first node executes step S2105 in response to the fifth information.

Step S2103: The first node sends sixth information to the second node.

In some embodiments, the sixth information includes a first configuration list indicating the second RACH resource that has been configured by the first node.

In some embodiments, the sixth information indicates the second node to update the first RACH resource based on the second RACH resource.

In some embodiments, the first node sends the sixth information to the second node in response to the fifth information sent by the second node. Optionally, the first node sends the sixth information to the second node based on the fifth information. Optionally, the first node determines whether to send the sixth information to the second node based on the fifth information sent by the second node.

In some embodiments, the first node determines that there is a conflict between the first RACH resource indicated by the fifth information sent by the second node and the second RACH resource, and sends the sixth information to the second node.

That is to say, after receiving the fifth information replied by the candidate node, the first node may send the sixth information carrying the configuration list of Early Sync resources configured for the candidate cells corresponding to other candidate nodes to the candidate node. The candidate node may then update the RACH resource generated for the corresponding candidate cell based on the sixth information to avoid conflicts. If the first node detects a conflict in RACH resources, the first node may send the sixth information to the candidate node with resource conflicts.

In some embodiments, the sixth information and the fourth information may be the same or different. For example, the sixth information and the fourth information may have the same message name. The sixth information may be, for instance, a "Handover Request message" or an "SN Addition Request message" or any other Xn message used to request LTM, which is not limited in the embodiments of the present disclosure.

In some embodiments, the second node receives the sixth information sent by the first node. Optionally, the second node updates the first RACH based on the sixth information. Optionally, the second node updates the first RACH based on the sixth information and performs step S2104.

Step S2104: The second node sends seventh information to the first node.

In some embodiments, the seventh information indicates the updated first RACH resource.

In some embodiments, the first node receives the seventh information. Optionally, the first node updates the second RACH resource based on the seventh information, for example, by adding the updated first RACH resource to the second RACH resource. Optionally, the first node updates the first configuration list based on the seventh information.

In some embodiments, the first node executes step S2105 in response to the seventh information. Optionally, the first node executes step S2105 after receiving the seventh information.

In some embodiments, the seventh information and the fifth information may be the same or different. For example, the seventh information and the fifth information may have the same message name. The seventh information may be, for instance, "Handover Request Acknowledge message" or "SN Addition Request Acknowledge message" or any other acknowledge message used to request LTM, or may also be "Handover Preparation" information or "Handover Command". The name of the seventh information is not limited in the embodiments of this disclosure.

Step S2105: The first node sends eighth information to the terminal.

In some embodiments, the eighth information indicates the first RACH resource. Optionally, the eighth information indicates the updated first RACH resource.

For example, after receiving the fifth information or the seventh information sent by the second node, the first node may send the relevant information of the first RACH resource indicated by the fifth information or the seventh information to the terminal, so that the terminal can at least know the RACH resource corresponding to the first cell, such as the starting and ending time-frequency domain positions for the terminal to perform early synchronization with the first cell.

In some embodiments, the eighth information includes first configuration list. Optionally, the eighth information indicates the second RACH resource, which includes the first RACH resource. Optionally, the first RACH resource may be the updated first RACH resource.

That is to say, after receiving the fifth information or the seventh information, the first node may determine the first RACH resource indicated by the fifth information or the seventh information as the configured RACH resource, and make the terminal aware of the configuration of the RACH resources corresponding to each candidate cell through the eighth information.

In some embodiments, the eighth information may include the configuration of RACH resources related to candidate cells. Optionally, the eighth information may include at least one of the following: a node identifier for at least one candidate node, such as the node identifier of the second node; a cell identifier for at least one candidate cell, such as the cell identifier of the first cell; a configuration identifier corresponding to each candidate cell, such as the configuration identifier corresponding to the first RACH resource; or the RACH resource corresponding to each configuration identifier.

In some embodiments, the eighth information may be referred to as "candidate cell configuration information", "RACH resource configuration", "RRC configuration", etc, which is not limited in the embodiments of the present disclosure.

In some embodiments, one or more of the aforementioned steps S2101 to S2105 may be a process of negotiating Early RACH resources.

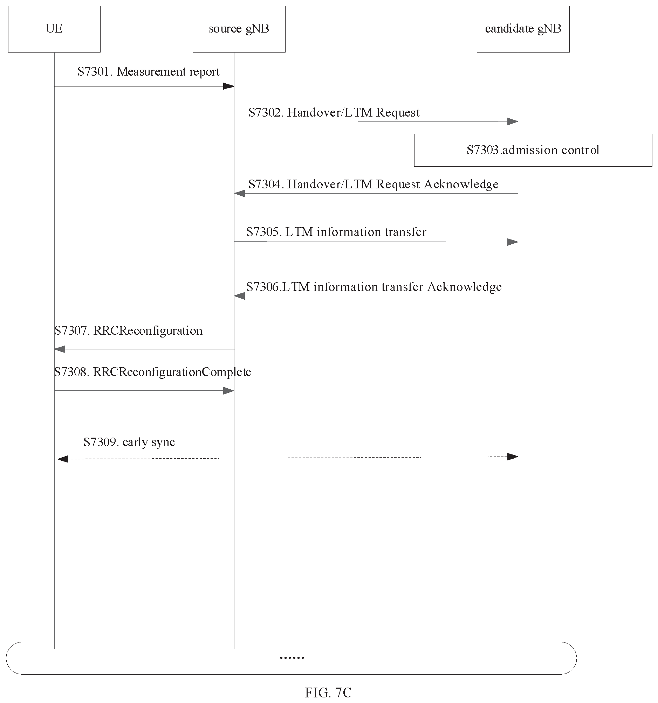

In some embodiments, the negotiation of Early RACH resources may include at least one of the following: negotiation of Early RACH resources in the MCG LTM scenario; negotiation of Early RACH resources in the SCG LTM scenario initiated by the MN; and negotiation of Early RACH resources in the SCG LTM scenario initiated by the SN. For the negotiation process of Early RACH resources in each scenario, reference can be made to the corresponding detailed descriptions of the embodiments shown in FIGs 7C to 7D, which will not be elaborated here.

Step S2106: The terminal sends third information to the second node.

In some embodiments, the third information is used for early synchronization between the terminal and the first cell, which, for example, can facilitate the second node in determining the second information. The second information may include, for example, TA related information of the first cell. Optionally, the TA related information at least includes the TA value corresponding to the terminal in the first cell.

In some embodiments, the third information includes a RA preamble. Optionally, the third information is used for the terminal to perform early synchronization with the first cell. Optionally, the third information is configured to request the second node to determine the TA related information of the first cell. Optionally, the RA preamble is used for the second node to determine the TA related information of the first cell.

In some embodiments, the second node is a node associated with one or more candidate cells. The first cell may include one or more candidate cells associated with the second node. The third information is configured to request the TA related information of the one or more candidate cells associated with the second node. Optionally, the RA preamble is used for the second node to determine the TA related information of the one or more candidate cells associated with the second node.

In some embodiments, the terminal initiates synchronization with the candidate node associated with the candidate cell, such as early synchronization. The candidate node obtains the corresponding TA related information corresponding to the candidate cell based on the received RA preamble, such as the TA value corresponding to the candidate cell.

In some embodiments, the terminal sends a RA preamble to the candidate node associated with the candidate cell. Based on the received RA preamble, the candidate node obtains the corresponding TA related information for the candidate cell, such as the TA value corresponding to the candidate cell.

In some embodiments, the TA related information may include at least one of the following: the TA value of the first cell; the preamble; the RA-RNTI; or the identifier of the second node. Optionally, the TA value of the first cell may include the TA values corresponding to one or more candidate cells associated with the second node.

It can be understood that the TA related information of the candidate cell may be the TA related information between the candidate cell and the terminal. This TA related information may be used for more reliable communication between the terminal and the candidate cell. For example, the terminal may send data or signaling to the second node corresponding to the first cell based on the TA related information of the first cell, or the second node in the first cell may send data or signaling to the terminal based on the TA related information of the first cell.

In some embodiments, the first node is the source base station and the second node is the candidate base station, or the first node is the MN and the second node is the candidate SN. After receiving the third information, the second node may determine the TA related information of the first cell and the corresponding second information based on the third information.

In some embodiments, the first node is the serving SN and the second node is the candidate SN. Upon receiving the third information, the second node may determine the TA related information of the first cell and the corresponding second information based on the third information.

In some embodiments, the second node receives the third information sent by the terminal. Optionally, the second node determines the TA related information of the first cell based on the RA preamble. Optionally, the second node determines the second information based on the third information and performs step S2107. Optionally, the second node determines the second information based on the third information and sends the second information to the first node through the MN.

In some embodiments, the third information may be, for example, "RA preamble", "early TA acquisition message", etc., which is not limited in the embodiments of the present disclosure.

In some embodiments, the third information is transmitted using the first RACH resource. Optionally, the terminal sends the third information to the second node using the first RACH resource. The first RACH resource may be determined based on one or more steps from steps S2101 to S2104, or may be determined by other means. This is not limited in the embodiments of the present disclosure.

In some embodiments, early synchronization may include the synchronization of early TA. The aforementioned steps S2105 and S2106 may be the synchronization process of early TA. That is, the terminal may acquire the TA value of the candidate cell in advance before performing cell handover, thereby enabling faster and more reliable completion of cell handover.

Step S2107: The second node sends second information to the first node.

In some embodiments, the second information indicates the TA related information of the first cell, such as the TA value of the first cell. Optionally, the second information includes the TA related information of the first cell.

In some embodiments, the TA related information of the first cell includes at least one of the following corresponding to the first cell: an identifier of the first cell; a TA value; a preamble; a RA-RNTI; or an identifier of the second node.

In some embodiments, the second information may be determined by the second node based on the third information. Optionally, the TA related information of the first cell in the second information is determined based on the information related to early synchronization. Optionally, the TA related information may be determined based on the information related to early synchronization in the third information, such as the RA preamble.

In some embodiments, for MCG LTM or MN initiated SCG LTM, the second node may directly send the second information to the first node.

In some embodiments, the first node is the source base station and the second node is the candidate base station, or the first node is the MN and the second node is the candidate SN. The second information is determined and sent by the second node based on the third information, which includes a random access (RA) preamble. The third information may be sent by the terminal based on step S2106.

In some embodiments, for SN initiated SCG LTM, the second node may send the second information to the first node via the MN.

In some embodiments, the first node is serving SN and the second node is the candidate SN. The second node sends the second information to the MN, and the MN forwards the second information to the first node. Optionally, the first node receives the second information sent by the MN, and the second information is determined and sent to the MN by the second node based on third information.

In some embodiments, the second information may be an Xn message, such as a "TA information transfer message", or may be another message, the name of which is not limited the in embodiments of the present disclosure.

In some embodiments, for MCG LTM, the second information may further include at least one of the following: an Xn message type; a source base station identifier; a candidate base station identifier, such as the node identifier of the second node; or a terminal identifier. Optionally, the terminal identifier may include at least one of the following: an XnAP identifier of the terminal on the source base station, or an XnAP identifier of the UE on the candidate base station.

For example, for MCG LTM, the TA related information can be represented as shown in Table 1 below:

**Table 1**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3.1 | | YES | ignore |
| **TA Information List** | | *0..1* | | | YES | ignore |
| **>TA Information Item IEs** | | *1 .. <maxno ofTAList >* | | | EACH | ignore |
| >>Candidate Cell ID | M | | Global NG-RAN Cell Identity 9.2.2.27 | | - | |
| >>TA Value | M | | INTEGER (0..4095) | Indicates the TA value as defined in TS 38.213 [31]. | - | |
| >>Preamble Index | M | | INTEGER (0..63) | | - | |
| >>RA-RNTI | M | | INTEGER (0..65535, ... ) | RA-RNTI as defined in TS 38.321 [16]. | - | |
| >> Target NG-RAN node ID | M/O | | Global NG-RAN Node ID 9.2.2.3 | | - | |

Message Type may indicate the Xn message type of the second information, and TA Information List may include TA Information Item IE corresponding to multiple candidate cells associated with the second node. The Candidate Cell ID in the TA Information Item IE may indicate the cell identifier of the candidate cell, the TA Value may indicate the TA value corresponding to the candidate cell, the Preamble Index indicates the preamble corresponding to the candidate cell, and the Target NG-RAN node ID indicates the node identifier of the candidate base station corresponding to the candidate cell.

In some embodiments, for MN-initiated SCG LTM or SN initiated SCG LTM, the second information may include, in addition to the TA related information, at least one of the following: Xn message type; MN identifier and/or serving SN identifier, such as the node identifier of the second node; candidate SN identifier; or terminal identifier. Optionally, the terminal identifier may include, for example, the XnAP identifier of the terminal on the MN and the XnAP identifier of the terminal on the SN.

For example, for MN initiated SCG LTM or SN initiated SCG LTM, the TA related information of the first cell may be represented as shown in Table 2 below:

**Table 2**

| **IE/Group Name** | **Presence** | **Range** | **IE type and reference** | **Semantics description** | **Criticality** | **Assigned Criticality** |
|---|---|---|---|---|---|---|
| Message Type | M | | 9.2.3.1 | | YES | ignore |
| **TA Information List** | | *0..1* | | | YES | ignore |
| **>TA Information Item IEs** | | *1 . . <maxno ofTAList >* | | | EACH | ignore |
| >>Candidate Cell ID | M | | Global NG-RAN Cell Identity 9.2.2.27 | | - | |
| >>TA Value | M | | INTEGER (0..4095) | Indicates the TA value as defined in TS 38.213 [31]. | - | |
| >>Preamble Index | M | | INTEGER (0..63) | | - | |
| >>RA-RNTI | M | | INTEGER (0..65535, ... ) | RA-RNTI as defined in TS 38.321 [16]. | - | |
| >> Target S-NG-RAN node ID | M/O | | Global NG-RAN Node ID 9.2.2.3 | | - | |

Message Type may indicate the Xn message type of the second information, TA Information List may include TA Information Item IE corresponding to multiple candidate cells, the Candidate Cell ID in the TA Information Item IE may indicate the cell identifier of the candidate cell, TA Value may indicate the TA value corresponding to the candidate cell, Preamble Index indicates the preamble corresponding to the candidate cell, and Target S-NG-RAN node ID indicates the node identifier of the candidate SN corresponding to the candidate cell.

In some embodiments, the first node receives the second information sent by the second node. Optionally, the first node receives the second information sent by the second node through the MN. Optionally, the first node determines the first information based on the second information and executes step S2108.

Step S2108: The first node sends first information to the terminal.

In some embodiments, the first node determines to perform cell handover to the first cell and sends the first information to the terminal.

In some embodiments, the first information includes the TA value of the first cell, which may be determined based on the second information.

In some embodiments, the first node may receive a measurement report sent by the terminal and determine whether to trigger cell handover based on the measurement report. Optionally, the first node determines whether to trigger RACH-less LTM based on the measurement report.

In some embodiments, the measurement report may be either a layer 1 (L1) measurement report or a layer 2 (L2) measurement report. The cell handover process triggered based on the L1 measurement report or L2 measurement report may be referred to as L1/L2 Triggered Mobility (LTM). Optionally, the process of steps S2101 and S2104 described above may be the process of configuring LTM candidate cells.

In some embodiments, the first node determines whether to indicate the terminal to perform cell handover to the first cell based on the measurement report. Optionally, the first node determines the first cell to be handed over among the candidate cells based on the measurement report sent by the terminal, and sends the first information to the terminal.

It can be understood that the first node may receive the second information sent by multiple candidate nodes and determine the TA values of these candidate cells. When the first node determines to switch the terminal to a specific candidate cell based on the measurement report from the terminal, the first node sends the corresponding TA value of that candidate cell to the terminal.

For example, if the first node determines to switch the terminal to the first cell based on the measurement report, the first node may determine the TA value corresponding to the first cell in the second information according to the identifier of the first cell, and include this TA value in the first information.

In some embodiments, the first information may be "Cell switch command", "cell handover command", "TA indication information", etc., the name of which is not limited in the embodiments of the present disclosure.

In some embodiments, the terminal receives the first information sent by the first node. Optionally, the terminal executes step S2109 in response to the first information. Optionally, the terminal executes step S2109 after receiving the first information.

In some embodiments, one or more of the aforementioned steps S2106 to S2108 may be a process of negotiating Early TA values.

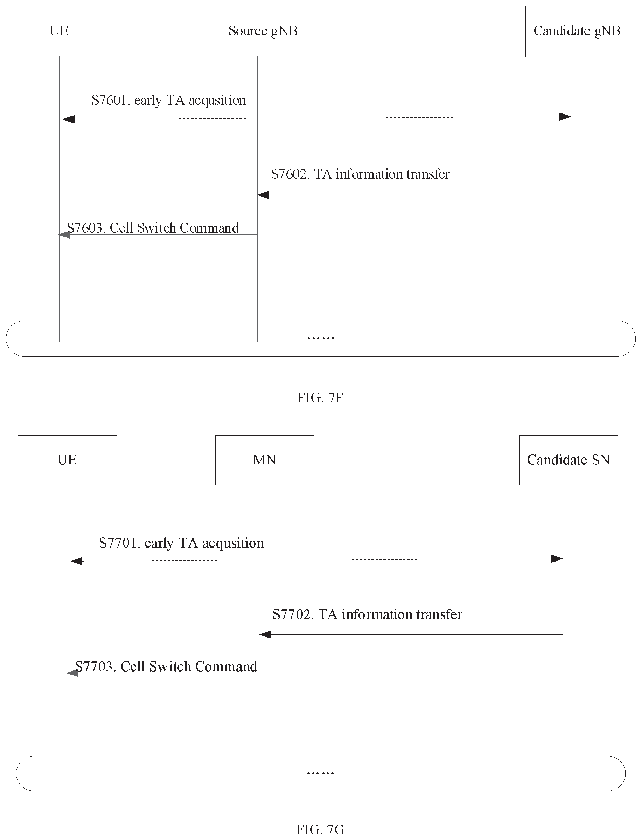

In some embodiments, the negotiation of Early TA values may include at least one of the following: negotiation of Early TA values in the MCG LTM scenario; negotiation of Early TA values in the MN initiated SCG LTM scenario; and negotiation of Early TA values in the SN initiated SCG LTM scenario. For the negotiation process of Early TA values in each scenario, reference can be made to the corresponding detailed descriptions of the embodiments shown in FIGs 7F to 7G, which will not be elaborated here.

Step S2109: The terminal performs cell handover to the first cell.

In some embodiments, the terminal performs cell handover to the first cell based on the first information. Optionally, the terminal performs cell handover to the first cell based on the TA value of the first cell. Optionally, the terminal switches the serving cell to the first cell based on the TA value of the first cell. Optionally, the terminal switches the serving node to the second node based on the TA value of the first cell.

In some embodiments, names of information and other elements are not limited to those specified in the embodiments. The terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., may be used interchangeably.

In some embodiments, terms such as "up", "uplink", and "physical uplink" may be substituted for each other, and terms such as "down", "downlink ", and "physical downlink" may be substituted for each other. Similarly, terms such as "side", "sidelink", "side communication", "sidelink communication", "direct connection", "direct link", "direct communication", and "direct link communication" may be substituted for each other.

In some embodiments, terms such as "downlink control information (DCI)", "downlink (DL) assignment", "DL DCI", "uplink (UL) grant", and "UL DCI" may be substituted for each other.

In some embodiments, terms such as "physical downlink shared channel (PDSCH)" and "DL data" may be substituted for each other, and terms such as "physical uplink shared channel (PUSCH)" and "UL data" may be substituted for each other.

In some embodiments, terms such as "radio", "wireless", "radio access network (RAN)", "access network (AN)", and "RAN-based" may be substituted for each other.

In some embodiments, terms such as "moment", "time point", "time", and "time position" may be substituted for each other, and terms such as "duration", "time period", "time window", "window", and "time" may also be substituted for each other.

In some embodiments, terms such as "component carrier (CC)", "cell", "frequency carrier", and "carrier frequency" may be substituted for each other.

In some embodiments, terms such as "resource block (RB)", "physical resource block (PRB)", "sub-carrier group (SCG)", "resource element group (REG)", "PRB pair", "RB pair", "resource element (RE)", and "sub-carrier" may be interchanged with each other.

In some embodiments, "acquire", "obtain", "get", "receive", "transmit", "bidirectional transmit", "send and/or receive" may be substituted for each other, which may be interpreted as receiving from other entities, acquiring from protocols, obtaining from higher layers, processing and obtaining by oneself, implementing autonomously, and other meanings.

In some embodiments, terms such as "send", "transmit", "report", "issue", "transfer", "bidirectional transfer", "send and/or receive" may be substituted for each other.

In some embodiments, terms such as "certain", "predetermined", "preset", "set", "indicated", "a certain", "any", and "first" may be interchanged with each other. "specific A", "predetermined A", "preset A", "set A", "indicated A", "a certain A", "any A", and "first A" may be interpreted as A predefined in a protocol or the like, or as A obtained through setting, configuration, or indication, or as a specific A, a certain A, any A, or first A, but are not limited to these interpretations.

In some embodiments, the determination or judgment may be made through a value represented by 1 bit (0 or 1), through a true-false value (Boolean) represented by true or false, or through a comparison of numerical values (for example, comparison with a predetermined value), but is not limited to these methods.

In some embodiments, "not expecting to receive" may be interpreted as not receiving on time-domain resources and/or frequency-domain resources, or as not performing subsequent processing on the received data, etc.; "not expecting to send" may be interpreted as not sending, or as sending but not expecting the receiver to respond to the sent content.

The communication method involved in embodiments of the present disclosure may include at least one of steps S2101 to S2109. For example, step S2101 may be implemented as an independent embodiment, step S2102 may be implemented as an independent embodiment, step S2107 may be implemented as an independent embodiment, steps S2101 and S2102 may be implemented as an independent embodiment, steps S2101 to S2104 may be implemented as an independent embodiment, and steps S2106 to S2107 may be implemented as an independent embodiment, but not limited to these.

In some embodiments, steps S2101 to S2109 may be executed in any order or simultaneously.

In some embodiments, steps S2102 to S2109 are optional, and one or more of these steps may be omitted or replaced in different embodiments.

In some embodiments, steps S2101 to S2107 and step S2109 are optional, and one or more of these steps may be omitted or replaced in different embodiments.

In some embodiments, steps S2101 to S2106 and steps S2107 to S2108 are optional, and one or more of these steps may be omitted or replaced in different embodiments.

In some embodiments, reference can be made to other alternative implementations described before or after the specification corresponding to FIG. 2.

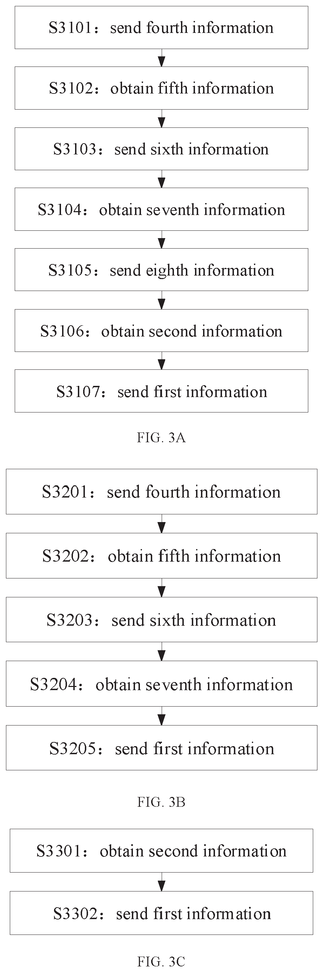

FIG. 3A is a schematic flowchart of a communication method according to an embodiment of the present disclosure. As shown in FIG. 3A, this embodiment of the present disclosure relates to a communication method (on the first node side), and method include the following steps.

Step S3101: fourth information is sent.

For optional implementations of step S3101, reference can be made to the optional implementations of step S2101 in FIG. 2, as well as other related parts in the embodiments mentioned in FIG. 2, which will not be elaborated here.

In some embodiments, the first node sends the fourth information to the second node, but it is not limited to this. The fourth information may also be sent to other entities.

Step S3102: fifth information is obtained.

For optional implementations of step S3102, reference can be made to the optional implementations of step S2102 in FIG. 2, as well as other related parts in the embodiments mentioned in FIG. 2, which will not be elaborated here.

In some embodiments, the first node receives the fifth information sent by the second node, but it is not limited to this. The first node may also receive the fifth information sent by other entities.

In some embodiments, the first node obtains the fifth information specified by the protocol.

In some embodiments, the first node acquires the fifth information from the upper layer(s).

In some embodiments, the first node performs processing to obtain the fifth information.

In some embodiments, step S3102 is omitted, and the first node autonomously implements the function indicated by the fifth information, or the aforementioned function is default or preset.

Step S3103: sixth information is sent.

For optional implementations of step S3103, reference can be made to the optional implementations of step S2103 in FIG. 2, as well as other related parts in the embodiment involved in FIG. 2, which will not be elaborated here.

In some embodiments, the first node sends the third information to the second node, but this is not limited to this. The first node may also send the third information to other entities.

Step S3104: seventh information is obtained.

For optional implementations of step S3104, reference can be made to the optional implementations of step S2104 in FIG. 2, as well as other related parts in the embodiment involved in FIG. 2, which will not be elaborated here.

In some embodiments, the first node receives the seventh information sent by the second node, but it is not limited to this. The first node may also receive the seventh information sent by other entities.

In some embodiments, the first node acquires the seventh information specified by the protocol.

In some embodiments, the first node acquires the seventh information from the upper layer(s).

In some embodiments, the first node performs processing to obtain the seventh information.

In some embodiments, step S3104 is omitted, and the first node autonomously implements the function indicated by the seventh information, or the aforementioned function is default or preset.

Step S3105: eighth information is sent.

For optional implementations of step S3105, reference can be made to the optional implementations of step S2105 in FIG. 2, as well as other related parts in the embodiment involved in FIG. 2, which will not be elaborated here.

In some embodiments, the first node sends the eighth information to the terminal, but it is not limited to this. The first node may also send the eighth information to other entities.

Step S3106: second information is obtained.

For optional implementations of step S3106, reference can be made to the optional implementations of step S2107 in FIG. 2, as well as other related parts in the embodiments mentioned in FIG. 2, which will not be elaborated here.

In some embodiments, the first node receives the second information sent by the second node, but it is not limited to this. The first node may also receive the second information sent by other entities.

In some embodiments, the first node obtains the second information specified by the protocol.

In some embodiments, the first node obtains the second information from the upper layer(s).

In some embodiments, the first node performs processing to obtain the second information.

In some embodiments, step S3106 is omitted, and the first node autonomously implements the function indicated by the second information, or the aforementioned function is default or preset.

Step S3107: first information is sent.

For optional implementations of step S3107, reference can be made to the optional implementations of step S2108 in FIG. 2, as well as other related parts in the embodiments mentioned in FIG. 2, which will not be elaborated here.

In some embodiments, the first node sends the first information to the terminal, but it is not limited to this. The first node may also send the first information to other entities.

The communication method involved in embodiments of the present disclosure may include at least one of steps S3101 to S3107. For example, step S3101 may be implemented as an independent embodiment, step S3106 may be implemented as an independent embodiment, step S3107 may be implemented as an independent embodiment, steps S3101 and S3102 may be implemented as an independent embodiment, steps S3101 to S3104 may be implemented as an independent embodiment, and steps S3106 to S3107 may be implemented as an independent embodiment, but not limited to these.

In some embodiments, steps S3102 to S3107 are optional, and one or more of these steps may be omitted or replaced in different embodiments.

In some embodiments, steps S3101 to S3106 are optional, and one or more of these steps may be omitted or replaced in different embodiments.

In some embodiments, steps S3101 to S3104 and step S3106 are optional, and one or more of these steps may be omitted or replaced in different embodiments.

FIG. 3B is a schematic flowchart of a communication method according to an embodiment of the present disclosure. As shown in FIG. 3B, this embodiment of the present disclosure relates to a communication method (on the first node side), and the method includes the following steps.

Step S3201: fourth information is sent.

For optional implementations of step S3201, reference can be made to optional implementations of step S2101 in FIG. 2 and step S3101 in FIG. 3A, and other related parts in the embodiments mentioned in FIG. 2 and FIG. 3A, which will not be elaborated here.

Step S3202: fifth information is obtained.

For optional implementations of step S3202, reference can be made to the optional implementations of step S2102 of FIG. 2 and step S3102 of FIG. 3A, and other related parts of the embodiments involved in FIG. 2 and FIG. 3A, which will not be elaborated here.

Step S3203: sixth information is sent.

For optional implementations of step S3203, reference can be made to the optional implementations of step S2103 in FIG. 2 and step S3103 in FIG. 3A, and other related parts in the embodiments mentioned in FIG. 2 and FIG. 3A, which will not be elaborated here.

Step S3204: seventh information is obtained.

For optional implementations of step S3204, reference can be made to the optional implementations of step S2104 in FIG. 2 and step S3104 in FIG. 3A, and other related parts in the embodiments mentioned in FIG. 2 and FIG. 3A, which will not be elaborated here.

Step S3205: first information is sent.

For optional implementations of step S3205, reference can be made to the optional implementations of step S2108 of FIG. 2 and step S3107 of FIG. 3A, and other related parts of the embodiments involved in FIG. 2 and FIG. 3A, which will not be elaborated here.

The communication method involved in embodiments of the present disclosure may include at least one of steps S3201 to S3205. For example, step S3201 may be implemented as an independent embodiment, step S3203 may be implemented as an independent embodiment, step S3205 may be implemented as an independent embodiment, steps S3201 and S3202 may be implemented as an independent embodiment, steps S3203 to S3204 may be implemented as an independent embodiment, and steps S3204 to S3205 may be implemented as an independent embodiment, but not limited to these.

In some embodiments, steps S3202 to S3205 are optional, and one or more of these steps may be omitted or replaced in different embodiments.

In some embodiments, steps S3201 to S3204 are optional, and one or more of these steps may be omitted or replaced in different embodiments.

In some embodiments, steps S3201 to S3203 and step S3205 are optional, and one or more of these steps may be omitted or replaced in different embodiments.

In some embodiments, the aforementioned steps S3201 to S3205 may be combined with at least one of steps S3101 to S3107 in FIG. 3A. For instance, steps S3201 to S3205 may be combined with step S3105.

FIG. 3C is a schematic flowchart of a communication method according to an embodiment of the present disclosure. As shown in FIG. 3C, this embodiment of the present disclosure relates to a communication method (on the first node side), and the method includes the following steps.

Step S3301: second information is obtained.

For optional implementations of step S3301, reference can be made to the optional implementations of step S2107 in FIG. 2 and step S3106 in FIG. 3A, and other related parts in the embodiments mentioned in FIG. 2, FIG. 3A, and FIG. 3B, which will not be elaborated here.

Step S3302: first information is sent.

For optional implementations of step S3302, reference can be made to the optional implementations of step S2108 in FIG. 2, step S3107 in FIG. 3A, and step S3205 in FIG. 3B, as well as other related parts in the embodiments involved in FIG. 2, FIG. 3A, and FIG. 3B, which will not be elaborated here.

The communication method involved in embodiments of the present disclosure may include at least one of steps S3301 to S3302. For example, step S3301 may be implemented as an independent embodiment, and step S3302 may also be implemented as an independent embodiment.

In embodiments of the present disclosure, at least one of steps S3301 and S3302 may be combined with at least one of steps S3201 to S3205 in FIG. 3B. For instance, step S3301 may be combined with steps S3201 and S3202 in FIG. 3B, but not limited to this.

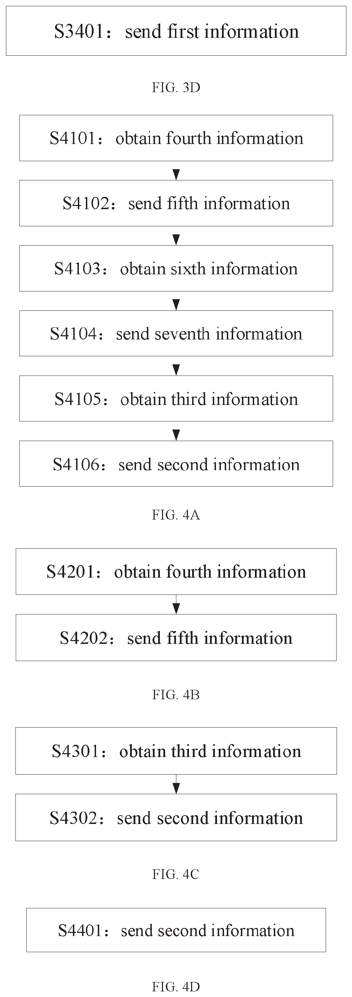

FIG. 3D is a schematic flowchart of a communication method according to an embodiment of the present disclosure. As shown in FIG. 3D, this embodiment of the present disclosure relates to a communication method (on the first node side), and the method includes the following steps.

Step S3401: first information is sent.

For optional implementations of step S3401, reference can be made to the optional implementations of step S2108 in FIG. 2, step S3107 in FIG. 3A, step S3205 in FIG. 3B, and step S3302 in FIG. 3C, as well as other related parts in the embodiments involved in FIG. 2, FIG. 3A, FIG. 3B, and FIG. 3C, which will not be elaborated here.

In some embodiments, the first node determines to perform a cell handover to the first cell, and sends first information to the terminal. The first information indicates the terminal to perform a cell handover to the first cell. The first node is a node associated with a serving cell of the terminal, and the serving cell and the first cell correspond to different nodes.

In some embodiments, the method includes:
receiving, by the first node, second information sent by a second node, wherein the second information includes timing advance (TA) related information of the first cell, the first information includes a TA value of the first cell, the TA value of the first cell is determined based on the second information, and the second node is a node associated with the first cell.

In some embodiments, the first node is a source base station, and the second node is a candidate base station; or
the first node is a master node (MN), and the second node is a candidate secondary node (SN); or
the first node is a serving SN, and the second node is a candidate SN.

In some embodiments, the TA related information of the first cell includes at least one of the following corresponding to the first cell: an identifier of the first cell, a TA value, a preamble, a random access radio network temporary identifier (RA-RNTI), or an identifier of the second node.

In some embodiments, the first node is the source base station and the second node is the candidate base station, or the first node is the MN and the second node is the candidate SN,
the second information is determined and sent by the second node based on third information, the third information is sent by the terminal, and the third information includes a random access (RA) preamble.

In some embodiments, the first node is a serving SN, and the second node is a candidate SN,
receiving, by the first node, the second information sent by the second node includes:
receiving, by the first node, the second information sent by an MN, wherein the second information is determined and sent by the second node to the MN according to third information, the third information is sent by the terminal, and the third information includes an RA preamble.

In some embodiments, the third information is sent by the terminal using a first random access channel (RACH) resource, and the first RACH resource is used for early synchronization between the first cell and the terminal.

In some embodiments, the method includes:
sending, by the first node, fourth information to a second node, wherein the fourth information indicates the second node to determine a first RACH resource, the second node is a node associated with the first cell, and the first RACH resource is used for early synchronization between the first cell and the terminal; and
receiving, by the first node, fifth information sent by the second node, wherein the fifth information indicates the first RACH resource.

In some embodiments, the method includes:
sending, by the first node, eighth information to the terminal, wherein the eighth information indicates the first RACH resource.

In some embodiments,
the fourth information includes a first configuration list, the first configuration list indicates a second RACH resource that has been configured by the first node, the second RACH resource is used for early synchronization between at least one second cell and the terminal, the fourth information indicates the second node to determine the first RACH resource based on the second RACH resource;
and/or, the method includes:
   sending, by the first node, sixth information to the second node, wherein the sixth information includes the first configuration list and indicates the second node to update the first RACH resource according to the second RACH resource.

In some embodiments, sending, by the first node, the sixth information to the second node includes:
determining, by the first node that there is a conflict between the first RACH resource and the second RACH resource, and sending, by the first node, the sixth information to the second node.

In some embodiments, the method includes:
receiving, by the first node, seventh information sent by the second node, where the seventh information indicates updated first RACH resource.

In some embodiments, the first configuration list includes at least one of:
a node identifier of a third node, wherein the third node is a node associated with the second cell;
a cell identifier of the second cell;
a configuration identifier corresponding to the second cell; or
a configuration of the RACH resource corresponding to the configuration identifier.

FIG. 4A is a schematic flowchart of a communication method according to an embodiment of the present disclosure. As shown in FIG. 4A, this embodiment of the present disclosure relates to a communication method (on the second node side), and the method includes the following steps.

Step S4101: fourth information is obtained.

For optional implementations of step S4101, reference can be made to the optional implementations of step S2101 in FIG. 2, as well as other related parts in the embodiments mentioned in FIG. 2, which will not be elaborated here.

In some embodiments, the second node receives the fourth information sent by the first node, but not limited to this. The second node may also receive the fourth information sent by other entities.

In some embodiments, the second node acquires the fourth information specified by the protocol.

In some embodiments, the second node acquires the fourth information from the upper layer(s).

In some embodiments, the second node performs processing to obtain the fourth information.

In some embodiments, step S4101 is omitted, and the second node autonomously implements the function indicated by the fourth information, or the aforementioned function is default or preset.

Step S4102: fifth information is sent.

For optional implementations of step S4102, reference can be made to the optional implementations of step S2102 in FIG. 2, as well as other related parts in the embodiments mentioned in FIG. 2, which will not be elaborated here.

In some embodiments, the second node sends the fifth information to the first node, but it is not limited to this. The second node may also send the fifth information to other entities.

Step S4103: sixth information is obtained.

For optional implementations of step S4103, reference can be made to the optional implementations of step S2103 in FIG. 2, as well as other related parts in the embodiments mentioned in FIG. 2, which will not be elaborated here.

In some embodiments, the second node receives the sixth information sent by the first node, but not limited to this. The second node may also receive the sixth information sent by other entities.

In some embodiments, the second node obtains the sixth information specified by the protocol.

In some embodiments, the second node obtains the sixth information from the upper layer(s).

In some embodiments, the second node performs processing to obtain the sixth information.

In some embodiments, step S4103 is omitted, and the second node autonomously implements the function indicated by the sixth information, or the aforementioned function is default or preset.

Step S4104: seventh information is sent.

For optional implementations of step S4104, reference can be made to the optional implementations of step S2104 in FIG. 2, as well as other related parts in the embodiments mentioned in FIG. 2, which will not be elaborated here.

In some embodiments, the second node sends the seventh information to the first node, but not limited to this. The second node may also send the seventh information to other entities.

Step S4105: third information is obtained.

For optional implementations of step S4105, reference can be made to the optional implementations of step S2106 in FIG. 2, as well as other related parts in the embodiments mentioned in FIG. 2, which will not be elaborated here.

In some embodiments, the second node receives the third information sent by the terminal, but it is not limited to this. The second node may also receive the third information sent by other entities.

In some embodiments, the second node obtains the third information specified by the protocol.

In some embodiments, the second node obtains the third information from upper layer(s).

In some embodiments, the second node performs processing to obtain the third information.

In some embodiments, step S4105 is omitted, and the second node autonomously implements the function indicated by the third information, or the aforementioned function is default or preset.

Step S4106: second information is sent.

For optional implementations of step S4106, reference can be made to the optional implementations of step S2107 in FIG. 2, as well as other related parts in the embodiments mentioned in FIG. 2, which will not be elaborated here.

In some embodiments, the second node sends the second information to the first node, but it is not limited to this. The second node may also send the second information to other entities.

The communication method involved in embodiments of the present disclosure may include at least one of steps S4101 to S4106. For example, step S4102 may be implemented as an independent embodiment, step S4103 may be implemented as an independent embodiment, step S4106 may be implemented as an independent embodiment, steps S4101 and S4102 may be implemented as an independent embodiment, steps S4101 to S4104 may be implemented as an independent embodiment, and steps S4106 to S4107 may be implemented as an independent embodiment, but not limited to these.

In some embodiments, steps S4102 to S4106 are optional, and one or more of these steps may be omitted or replaced in different embodiments.

In some embodiments, steps S4101 to S4104 and step S4106 are optional, and one or more of these steps may be omitted or replaced in different embodiments.

FIG. 4B is a schematic flowchart of a communication method according to an embodiment of the present disclosure. As shown in FIG. 4B, this embodiment of the present disclosure relates to a communication method (on the second node side), and the method includes the following steps.

Step S4201: fourth information is obtained.

For optional implementations of step S4201, reference can be made to the optional implementations of step S2101 in FIG. 2 and step S4101 in FIG. 4A, and other related parts in the embodiments involved in FIG. 2 and FIG. 4A, which will not be elaborated here.

Step S4202: fifth information is sent.

For optional implementations of step S4202, reference can be made to the optional implementations of step S2102 of FIG. 2 and step S4102 of FIG. 4A, and other related parts in the embodiments involved in FIG. 2 and FIG. 4A, which will not be elaborated here.

The communication method involved in embodiments of the present disclosure may include at least one of steps S4201 to S4202. For example, step S4101 may be implemented as an independent embodiment, and step S4102 may be implemented as an independent embodiment.

FIG. 4C is a schematic flowchart of a communication method according to an embodiment of the present disclosure. As shown in FIG. 4C, this embodiment of the present disclosure relates to a communication method (on the second node side), and the method includes the following steps.

Step S4301: third information is obtained.

For optional implementations of step S4301, reference can be made to the optional implementations of step S2106 of FIG. 2 and step S4105 of FIG. 4A, and other related parts in the embodiments involved in FIG. 2, FIG. 4A, and FIG. 4B, which will not be elaborated here.

Step S4302: second information is sent.

For optional implementations of step S4302, reference can be made to the optional implementations of step S2107 of FIG. 2 and step S4106 of FIG. 4A, and other related parts in the embodiments involved in FIG. 2, FIG. 4A, and FIG. 4B, which will not be elaborated here.

The communication method involved in embodiments of the present disclosure may include at least one of steps S4301 to S4302. For example, step S4301 may be implemented as an independent embodiment, and step S4302 may also be implemented as an independent embodiment.

In embodiments of the present disclosure, steps S4301 and S4302 may be combined with at least one step in FIG. 4A. For instance, steps S4301 and S4302 may be combined with steps S4103 and S4104, or may be combined with steps S4105 and S4106, but not limited to these.

FIG. 4D is a schematic flowchart of a communication method according to an embodiment of the present disclosure. As shown in FIG. 4D, this embodiment of the present disclosure relates to a communication method (on the second node side), and the method includes the following steps.

Step S4401: second information is sent.

For optional implementations of step S4401, reference can be made to the optional implementations of step S2107 in FIG. 2, step S4106 in FIG. 4A, and step S4302 in FIG. 4C, as well as other related parts in the embodiments mentioned in FIG. 2, FIG. 4A, FIG. 4B, and FIG. 4C, which will not be elaborated here.

In some embodiments, the second node sends the second information to the first node, wherein the second information includes timing advance (TA) related information of the first cell, the first node is a node associated with the serving cell of the terminal, the second node is a node associated with the first cell, and the first cell and the serving cell correspond to different nodes.

In some embodiments, the first node is a source base station, and the second node is a candidate base station; or
the first node is a master node (MN), and the second node is a candidate secondary node (SN); or
the first node is a serving SN, and the second node is a candidate SN.

In some embodiments, the TA related information of the first cell includes at least one of the following corresponding to the first cell: an identifier of the first cell, a TA value, a preamble, a RA-RNTI, or an identifier of the second node.

In some embodiments, the first node is a source gNB and the second node is a candidate gNB, or the first node is an MN and the second node is a candidate SN,
sending, by the second node, the second information to the first node includes:
receiving, by the second node, third information sent by the terminal, wherein the third information includes a random access (RA) preamble; and
determining and sending, by the second node, the second information to the first node according to the third information.

In some embodiments, the first node is a serving SN and the second node is a candidate SN,
sending, by the second node, the second information to the first node includes:
sending, by the second node, the second information to the first node via an MN, wherein the second information is determined by the second node according to third information, the third information is sent by the terminal, and the third information includes an RA preamble.

In some embodiments, the third information is sent by the terminal using a first random access channel (RACH) resource, and the first RACH resource is used for early synchronization between the first cell and the terminal.

In some embodiments, the method further includes:
receiving, by the second node, fourth information sent by the first node;
determining, by the second node, a first RACH resource, wherein the first RACH resource is used for early synchronization between the first cell and the terminal; and
sending, by the second node, fifth information to the first node, wherein the fifth information indicates the first RACH resource.

In some embodiments, the fourth information includes a first configuration list, the first configuration list indicates a second RACH resource that has been configured by the first node, the second RACH resource is used for early synchronization between at least one second cell and the terminal, the fourth information indicates the second node to determine the first RACH resource based on the second RACH resource;
and/or, determining, by the second node, the first RACH resource comprises: receiving, by the second node, sixth information sent by the first node, wherein the sixth information comprises the first configuration list; and updating, by the second node, the first RACH resource according to the second RACH resource.

In some embodiments, the method further includes:
sending, by the second node, seventh information to the first node, wherein the seventh information indicates the updated first RACH resource.

In some embodiments, the first configuration list includes at least one of:
a node identifier of a third node, wherein the third node is a node associated with the second cell;
a cell identifier of the second cell;
a configuration identifier corresponding to the second cell; or
a configuration of an RACH resource corresponding to the configuration identifier.

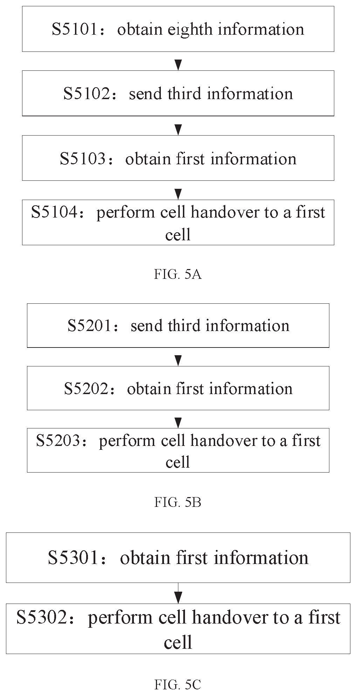

FIG. 5A is a schematic flowchart of a communication method according to an embodiment of the present disclosure. As shown in FIG. 5A, this embodiment of the present disclosure relates to a communication method (on the terminal side), and the method includes the following steps.

Step S5101: eighth information is obtained.

For optional implementations of step S5101, reference can be made to the optional implementations of step S2105 in FIG. 2, as well as other related parts in the embodiments involved in FIG. 2, which will not be elaborated here.

In some embodiments, the terminal receives the eighth information sent by the first node, but it is not limited to this. The terminal may also receive the eighth information sent by other entities.

In some embodiments, the terminal obtains the eighth information specified by the protocol.

In some embodiments, the terminal obtains the eighth information from the upper layer(s).

In some embodiments, the terminal performs processing to obtain the eighth information.

In some embodiments, step S5101 is omitted, and the terminal autonomously implements the function indicated by the eighth information, or the aforementioned function is default or preset.

Step S5102: third information is sent.

For optional implementations of step S5102, reference can be made to the optional implementations of step S2106 in FIG. 2, as well as other related parts in the embodiments mentioned in FIG. 2, which will not be elaborated here.

In some embodiments, the terminal sends the third information to the second node, but it is not limited to this. The terminal may also send the third information to other entities.

Step S5103: first information is obtained.

For optional implementations of step S5103, reference can be made to the optional implementations of step S2108 in FIG. 2, as well as other related parts in the embodiments mentioned in FIG. 2, which will not be elaborated here.

In some embodiments, the terminal receives the first information sent by the first node, but it is not limited to this. The terminal may also receive the first information sent by other entities.

In some embodiments, the terminal obtains the first information specified by the protocol.

In some embodiments, the terminal obtains the first information from the upper layer(s).

In some embodiments, the terminal performs processing to obtain the first information.

In some embodiments, step S5103 is omitted, and the terminal autonomously implements the function indicated by the first information, or the aforementioned function is default or preset.

Step S5104: cell handover to the first cell is performed.

For optional implementations of step S5104, reference can be made to the optional implementations of step S2109 in FIG. 2, as well as other related parts in the embodiments mentioned in FIG. 2, which will not be elaborated here.

The communication method involved in embodiments of the present disclosure may include at least one of steps S5101 to S5104. For example, step S5101 may be implemented as an independent embodiment, step S5102 may be implemented as an independent embodiment, step S5103 may be implemented as an independent embodiment, steps S5101 and S5102 may be implemented as an independent embodiment, steps S5102 to S5103 may be implemented as an independent embodiment, and steps S5103 to S5104 may be implemented as an independent embodiment, but not limited to these.

In some embodiments, steps S5101 to S5103 are optional, and one or more of these steps may be omitted or replaced in different embodiments.

In some embodiments, steps S5101 to S5102 and step S5104 are optional, and one or more of these steps may be omitted or replaced in different embodiments.

In some embodiments, steps S5102 to S5104 are optional, and one or more of these steps may be omitted or replaced in different embodiments.

FIG. 5B is a schematic flowchart of a communication method according to an embodiment of the present disclosure. As shown in FIG. 5B, this embodiment of the present disclosure relates to a communication method (on the terminal side), and the method includes the following steps.

Step S5201: third information is sent.

For optional implementations of step S5201, reference can be made to the optional implementations of step S2106 of FIG. 2 and step S5102 of FIG. 5A, and other related parts in the embodiments involved in FIG. 2 and FIG. 5A, which will not be elaborated here.

Step S5202: first information is obtained.

For optional implementations of step S5202, reference can be made to the optional implementations of step S2108 of FIG. 2 and step S5103 of FIG. 5A, and other related parts in the embodiments involved in FIG. 2 and FIG. 5A, which will not be further elaborated here.

Step S5203: cell handover to the first cell is performed.

For optional implementations of step S5203, reference can be made to the optional implementations of step S2109 of FIG. 2 and step S5104 of FIG. 5A, and other related parts in the embodiments involved in FIG. 2 and FIG. 5A, which will not be elaborated here.

The communication method involved in embodiments of the present disclosure may include at least one of steps S5201 to S5203. For example, step S5201 may be implemented as an independent embodiment, step S5202 may be implemented as an independent embodiment, step S5203 may be implemented as an independent embodiment, steps S5201 and S5202 may be implemented as an independent embodiment, and steps S5202 to S5203 may be implemented as an independent embodiment.

In some embodiments, steps S5201 to S5202 are optional, and one or more of these steps may be omitted or replaced in different embodiments.

In some embodiments, steps S5202 to S5203 are optional, and one or more of these steps may be omitted or replaced in different embodiments.

In some embodiments, steps S5201 and S5203 are optional, and one or more of these steps may be omitted or replaced in different embodiments.

FIG. 5C is a schematic flowchart of a communication method according to an embodiment of the present disclosure. As shown in FIG. 5C, this embodiment of the present disclosure relates to a communication method (on the terminal side), and the method includes the following steps.

Step S5301: first information is obtained.

For optional implementations of step S5301, reference can be made to the optional implementations of step S2108 in FIG. 2, step S5103 in FIG. 5A, and step S5202 in FIG. 5B, as well as other related parts in the embodiments mentioned in FIG. 2, FIG. 5A, and FIG. 5C, which will not be elaborated here.

Step S5302: cell handover to the first cell is performed.

For optional implementations of step S5302, reference can be made to the optional implementations of step S2109 in FIG. 2, step S5104 in FIG. 5A, and step S5203 in FIG. 5B, as well as other related parts in the embodiments involved in FIG. 2, FIG. 5A, and FIG. 5C, which will not be elaborated here.

In some embodiments, the terminal receives the first information sent by a first node, wherein the first node is a node associated with a serving cell of the cell;
the terminal performs cell handover to the first cell according to the first information, wherein the first cell and the serving cell correspond to different nodes.

In some embodiments, the method further includes:

performing, by the terminal, the cell handover to the first cell based on the TA value of the first cell in the first information, wherein the TA value of the first cell is determined by the first node according to second information, the second information is sent by the second node, the second information includes TA related information of the first cell, and the second node is a node associated with the first cell.

In some embodiments, the first node is a source base station, and the second node is a candidate base station; or
the first node is a master node (MN), and the second node is a candidate secondary node (SN); or
the first node is a serving SN, and the second node is a candidate SN.

In some embodiments, the TA related information of the first cell includes at least one of the following corresponding to the first cell: an identifier of the first cell; a TA value; a preamble; a RA-RNTI; or an identifier of the second node.

In some embodiments, the method further includes:
sending, by the terminal, third information to the second node, wherein the third information is configured for the second node to determine the second information, and the third information includes a random access (RA) preamble.

In some embodiments, the third information is sent by the terminal using a first random access channel (RACH) resource, and the first RACH resource is used for early synchronization between the first cell and the terminal.

In some embodiments, the method further includes:
receiving, by the terminal, eighth information sent by the first node, wherein the eighth information indicates the first RACH resource, and the first RACH resource is used for early synchronization between the first cell and the terminal.

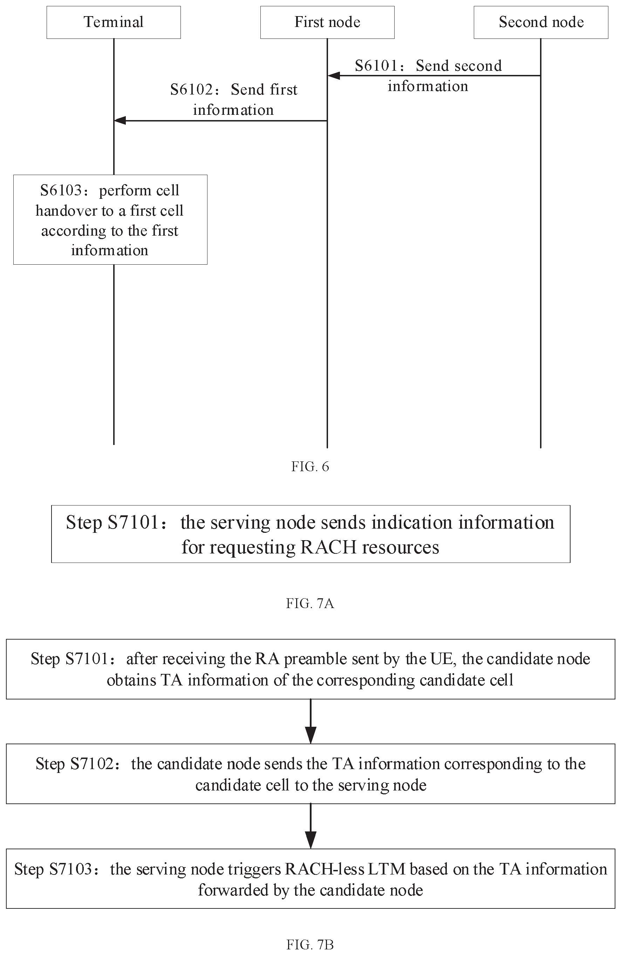

FIG. 6 is a schematic diagram illustrating interaction in a communication method according to an embodiment of the present disclosure. As shown in FIG. 6, this embodiment of the present disclosure relates to a communication method, and the method includes the following steps.

Step S6101: A second node sends second information to a first node.

For optional implementations of step S6101, reference can be made to the optional implementations of step S2107 in FIG. 2, step S3106 in FIG. 3A, step S3301 in FIG. 3C, step S4106 in FIG. 4A, step S4302 in FIG. 4C, and step S4401 in FIG. 4D, as well as other related parts in the embodiments involved in FIG. 2, FIG. 3A, FIG. 3B, FIG. 3C, FIG. 3D, FIG. 4A, FIG. 4B, FIG. 4C, FIG. 4D, FIG. 5A, FIG. 5B, and FIG. 5C, which will not repeated here.

Step S9102: The first node sends first information to a terminal.

For optional implementations of step S6101, reference can be made to the optional implementations of step S2108 in FIG. 2, step S3107 in FIG. 3A, step S3205 in FIG. 3B, step S3302 in FIG. 3C, step S3401 in FIG. 3D, step S5103 in FIG. 5A, step S5202 in FIG. 5B, and step S5301 in FIG. 5C, as well as other related parts in the embodiments involved in FIG. 2, FIG. 3A, FIG. 3B, FIG. 3C, FIG. 3D, FIG. 4A, FIG. 4B, FIG. 4C, FIG. 4D, FIG. 5A, FIG. 5B, and FIG. 5C, which will not be elaborated here.

Step S9103: The terminal performs a handover to a first cell according to the first information.

For optional implementations of step S6101, reference can be made to the optional implementations of step S2109 in FIG. 2, step S5104 in FIG. 5A, step S5203 in FIG. 5B, and step S5302 in FIG. 5C, as well as other related parts in the embodiments involved in FIG. 2, FIG. 3A, FIG. 3B, FIG. 3C, FIG. 3D, FIG. 4A, FIG. 4B, FIG. 4C, FIG. 4D, FIG. 5A, FIG. 5B, and FIG. 5C, which will not be repeated here.

FIG. 7A is a schematic flowchart of a communication method according to an embodiment of the present disclosure. As shown in FIG. 7A, this present embodiment of the present disclosure relates to a communication method, and the method includes the following steps.

Step S7101: A serving node sends indication information for a RACH resource request.

In some embodiments, the serving node sends the indication information for the RACH resource request, instructing candidate nodes to generate RACH resources for Early RACH for the corresponding candidate cells. After receiving the corresponding request message, if the candidate node supports the relevant function, the candidate node may include the corresponding RACH resource configuration for the candidate cell in the corresponding acknowledgment message sent to the serving node.

In some embodiments, for MCG LTM, the serving node is the source gNB, and the candidate node is the candidate gNB.

In some embodiments, to prevent different candidate cells from configuring the same RACH resources, the serving node may send the RACH resources configured by other candidate nodes for their respective candidate cells, thereby avoiding the candidate nodes from preparing the same RACH resource configuration.

In some embodiments, for MCG LTM, during the preparation phase of preparing LTM candidate configurations, the source gNB sends a first message to the candidate gNB, wherein the first message contains information related to requesting Early Sync.

In some embodiments, the first message may be a Handover Request message or other Xn message used to request LTM.

In some embodiments, the information related to requesting Early Sync includes, but is not limited to, one or more of the following: indication information for requesting relevant RACH resources. When the indication information indicates "True" or a specific value, or is already configured, it represents that the source gNB requests the candidate gNB to prepare corresponding RACH resources for Early Sync for the candidate cell included in the first message.

In some embodiments, after receiving the first message sent by the source gNB, if the information related to requesting Early Sync contained in the first message indicates to prepare the corresponding RACH resources for the corresponding candidate cell, and if the candidate gNB supports the relevant functions, the candidate gNB may include the corresponding RACH resources in the acknowledgment message sent to the source gNB for the first message.

In some embodiments, the acknowledgment message for the first message may be a Handover Request Acknowledge message or another acknowledgment message used to request an LTM message.

In some embodiments, to prevent different candidate gNBs from generating the same RACH resources for Early Sync for their corresponding different candidate cells, the candidate gNBs also need to be aware of the RACH resources prepared by other candidate gNBs for their respective candidate cells for Early Sync. Therefore, there are two optional schemes to avoid conflicts in RACH resources for Early Sync.

In Scheme 1, the source gNB includes in relevant information for requesting Early Sync in the first message sent to the candidate gNB a configuration list of Early Sync resources configured for candidate cells (corresponding to other candidate gNBs), which enables the candidate gNB to avoid conflicts with these already configured resources when generating the corresponding RACH resource.

Optionally, since the source gNB may request multiple candidate gNBs simultaneously, after receiving the acknowledgment message for the first message from the candidate gNBs, the source gNB may send a second message carrying a configuration list of Early Sync resources configured for candidate cells (corresponding to other candidate gNBs) to the candidate gNB. Depending on the implementation, if the source gNB detects a conflict in RACH resources, the source gNB may send a second message to the candidate gNBs experiencing resource conflicts, if necessary. The candidate gNBs may update the RACH resources generated for the corresponding candidate cells based on the second message to avoid conflicts, and send an acknowledgment message for the second message to the source gNB.

In Scheme 2, (Without carrying RACH resources of other candidate cells in the first message) after receiving the acknowledgement message for the first message replied by the candidate gNB, the source gNB sends a second message carrying the configuration list of Early Sync resources configured for (other) candidate cells to the candidate gNB (based on implementation, if the source gNB finds a conflict in RACH resources, the source gNB may send a second message to the candidate gNB with resource conflicts if necessary). The candidate gNB may update the RACH resource generated for the corresponding candidate cell based on the second message to avoid conflicts, and send an acknowledgement message for the second message to the source gNB.

In some embodiments, the second message may either be the same as or different from the first message, such as an Xn message transmitting LTM-related information; the acknowledgment message for the second message may either be the same as or different from the acknowledgment message for the first message, such as the acknowledgment message for the Xn message transmitting LTM-related information.

In some embodiments, the configuration list of Early Sync resources configured for other candidate cells may include IDs (such as CGI) of multiple candidate cells, and/or LTM configuration identifiers, as well as the corresponding RACH resource configurations.

In some embodiments, the indication information for requesting relevant RACH resources, the corresponding RACH resource of the candidate cell generated by the candidate gNB, and the list of RACH resources for Early Sync generated by other candidate cells may be directly included in the aforementioned Xn message, or indicated through the corresponding inter-node RRC message.

In some embodiments, the indication information for requesting relevant RACH resources, along with the RACH resources for Early Sync (including the RACH resource corresponding to the candidate cell generated by the candidate gNB, as well as a list of RACH resources for Early Sync generated by other candidate cells), may be represented through the EarlyUL-SyncConfig IE, or may be included in the inter-node RRC message, such as Handover Preparation or Handover Command.

In some embodiments, for SCG LTM, the serving node may be the MN, and the candidate node may be the candidate SN.

In some embodiments, the MN sends the first message to the candidate SN, wherein the first message contains information related to requesting Early Sync.

In some embodiments, the first message may be an SN Addition Request message or another Xn message used to request LTM.

In some embodiments, the information related to requesting Early Sync includes, but is not limited to, one or more of the following:
the indication information for requesting relevant RACH resources, when the indication information indicates "True" or a specific value, or has been configured, indicates that the source gNB requests the candidate gNB to prepare corresponding RACH resources for Early sync for one or more candidate cells in the recommended candidate cell list contained in the first message;
information related to requesting Early Sync (such as the indication information for requesting relevant RACH resources) may be per candidate cell or specific to this candidate SN. For example, each cell in the recommended candidate cells included in the first message corresponds to one indication information.

In some embodiments, upon receiving the first message sent by the MN, if the information related to requesting Early Sync contained in the first message indicates the request to prepare the corresponding RACH resource for the corresponding candidate cell, then if the candidate SN supports the relevant function, the candidate SN may include the corresponding RACH resource corresponding to the corresponding candidate cell in the acknowledgement message sent to the MN for the first message.

In some embodiments, the acknowledgment message for the first message may be either an SN Addition Request Acknowledge message or another acknowledgment message used to request an LTM message.

In some embodiments, to prevent different candidate SNs from generating the same RACH resource for Early Sync for their corresponding different candidate cells, the candidate SN also needs to be aware of the RACH resources prepared by other candidate SNs for their respective candidate cells for Early Sync. Therefore, there are two optional schemes to avoid conflicts in RACH resources for Early Sync.

Scheme 1: In the information related to requesting Early Sync in the first message sent by the MN to the candidate SN, a configuration list of Early Sync resources configured for the candidate cells corresponding to (other) candidate SNs is included. In this way, when the candidate SN generates the corresponding RACH resource, it can avoid conflicts with these already configured resources.

Optionally, since the MN may simultaneously request (either triggered by the MN or the S-SN) multiple candidate SNs, after receiving the acknowledgement message for the first message from a candidate SN, the MN may send a second message carrying the configuration list of Early Sync resources configured for the candidate cells corresponding to (other) candidate SNs to the candidate SN (depending on the implementation, if the MN detects a conflict in RACH resources, the MN may send the second message to the candidate SN with resource conflicts if necessary). The candidate SN may update the RACH resource generated for the corresponding candidate cell based on the second message to avoid conflicts, and send the updated RACH resource through the acknowledgement message for the second message to the MN.

Scheme 2: (without carrying RACH resources for other candidate cells in the first message) after receiving the acknowledgement message for the first message from the candidate SN, the MN may send a second message carrying the configuration list of Early Sync resources configured for the candidate cells corresponding to (other) candidate SNs to the candidate SN (based on implementation, if the MN detects a conflict in RACH resources, the MN may send the second message to the candidate SN with resource conflicts if necessary). The candidate SN may update the RACH resource generated for the corresponding candidate cell based on the second message to avoid conflicts, and send the updated RACH resource to the MN through the acknowledgement message for the second message.

In some embodiments, the second message may be an SN Modification Request message or other Xn messages used to request LTM; the acknowledgement message for the first message may be an SN Modification Request Acknowledge message or other acknowledgement messages used for requesting LTM messages.

In some embodiments, the acknowledgement message for the second message may either be the same as or different from the acknowledgement message for the first message, such as the acknowledgement information for the Xn message transmitting LTM-related information.

In some embodiments, the configuration list of Early Sync resources configured for candidate cells may include IDs of multiple candidate SNs, IDs of the candidate cells (e.g., CGI), and/or LTM configuration identifiers, as well as the corresponding RACH resource configurations.

In some embodiments, the indication information for requesting relevant RACH resources, the corresponding RACH resources of one or more candidate cells generated by the candidate SN, and the list of RACH resources for Early Sync generated by the candidate cells corresponding to other candidate SNs may be directly included in the aforementioned Xn message, or indicated through the corresponding inter-node RRC message.

In some embodiments, the RACH resources for Early Sync (including the RACH resource corresponding to the candidate cell generated by the candidate SN, as well as the list of RACH resources generated by other candidate cells for Early Sync) may be represented by the EarlyUL-SyncConfig IE, or included in inter-node RRC message, such as CG-CandidateList, CG-Config, and CG-ConfigInfo.

In embodiments of the present disclosure, the first message may be the fourth information or a part of the fourth information mentioned in some of the aforementioned embodiments, the acknowledgement message for the first message may be the fifth information or a part of the fifth information mentioned in some of the aforementioned embodiments, the second message may be the sixth information or a part of the sixth information mentioned in some of the aforementioned embodiments, and the acknowledgement message for the second message may be the seventh information or a part of the seventh information mentioned in some of the aforementioned embodiments.

In embodiments of the present disclosure, some or all of the steps, as well as their optional implementations, may be arbitrarily combined with some or all of the steps in other embodiments, and may also be arbitrarily combined with the optional implementations of other embodiments.

FIG. 7B is a schematic flowchart of a communication method according to an embodiment of the present disclosure. As shown in FIG. 7B, this embodiment of the present disclosure relates to a communication method, and the method includes the following steps.

Step S7201: After receiving the RA Preamble sent by the UE, the candidate node obtains the TA information of the corresponding candidate cell.

Step S7202: The candidate node sends the TA information corresponding to the candidate cell to the serving node.

Step S7203: The serving node triggers RACH-less LTM based on the TA information forwarded by the candidate node.

In some embodiments, after receiving the RA Preamble sent by the UE, the candidate node obtains the corresponding TA information of the candidate cell. The candidate node sends the corresponding TA information of the candidate cell to the serving node, and the serving node triggers RACH-less LTM based on the TA information forwarded by the candidate node.

In some embodiments, for MCG LTM, the serving node is the source gNB, and the candidate node is the candidate gNB. For SCG LTM, the serving node is the MN and/or S-SN, and the candidate node is the candidate SN.

In some embodiments, for MCG LTM and MN/SN initiated SCG LTM, the candidate node is required to send the TA related information to the serving gNB or serving MN.

In some embodiments, for SN initiated SCG LTM, the /MN needs to forward the corresponding TA information related to the candidate cell to the S-SN after receiving it. Based on the TA information forwarded by the candidate node, the S-SN triggers RACH-less LTM.

### For MCG LTM:

In some embodiments, in step S7201, the UE performs the process of acquiring Early TA, and sends an RA Preamble to the candidate cell, and the candidate gNB obtains the TA value corresponding to the candidate cell based on the received RA Preamble.

In some embodiments, in step S7202, the candidate gNB sends a first message to the source (current serving) gNB. The first message contains the TA information corresponding to the candidate cell. The purpose of the first message is to enable the source gNB to send the TA related information to the terminal.

In some embodiments, the first message may be an existing Xn message, or a new Xn message, such as the first TA information transfer message.

In some embodiments, the TA information corresponding to the candidate cell includes, but is not limited to, one or more of the following: the TA value corresponding to one or more candidate cells, Preamble ID, RA-RNTI, or the corresponding candidate gNB ID.

In some embodiments, in addition to the TA information corresponding to the candidate cell, the first message may also include, but is not limited to, one or more of the following information: Xn message type; source gNB identifier, candidate gNB identifier, UE ID, such as the XnAP ID of the UE on the source gNB, and the XnAP ID of the UE on the candidate gNB.

In some embodiments, after receiving the first message, the source gNB, also known as the serving gNB, deems the received information as TA information from the candidate cell indicated by the contained candidate cell ID.

In some embodiments, the source gNB sends a Cell Switch Command to the UE in step S72023, which includes the TA value of the candidate cell.

### For MN initiated SCG LTM:

In some embodiments, in step S7201, the UE performs the process of obtaining Early TA, and sends a RA Preamble to the candidate cell, and the candidate SN obtains the corresponding TA value for the candidate cell based on the received RA Preamble.

In some embodiments, in step S7202, the candidate SN sends a first message to the MN, which contains the TA information corresponding to the candidate cell. The purpose of the first message is to enable the MN to send TA related information to the terminal.

In some embodiments, the first message may be an existing Xn message, or a new Xn message, such as a second TA information transfer message.

In some embodiments, the TA information corresponding to candidate cells includes, but is not limited to, one or more of the following: the TA value corresponding to one or more candidate cells, Preamble ID, RA-RNTI, and the corresponding candidate SN ID.

In some embodiments, in addition to the TA information corresponding to the candidate cell, the first message may also include, but is not limited to, one or more of the following information: Xn message type, MN identifier, candidate SN identifier, UE ID, such as the XnAP ID of the UE on the MN, and the XnAP ID of the UE on the SN.

In some embodiments, after receiving the first message, the MN believes that the received information is TA information from the candidate cell indicated by the contained candidate cell ID.

In some embodiments, in step S7203, the MN sends a Cell Switch Command to the UE, which includes the TA value of the candidate cell.

### For SN initiated SCG LTM:

In some embodiments, in step S7201, the UE performs the process of acquiring Early TA, and sends a RA Preamble to the candidate cell, and the candidate SN obtains the corresponding TA value for the candidate cell based on the received RA Preamble.

In some embodiments, in step S7202, the candidate SN sends a first message to the MN, which contains the TA information corresponding to the candidate cell. The purpose of the first message is to enable the MN to send the TA related information to the source SN and the terminal.

In some embodiments, upon receiving the TA information related to the candidate cell sent by the candidate SN, the MN forwards it to the source SN.

In some embodiments, after receiving the TA related information forwarded by the MN, the serving SN deems the received information as TA information from the candidate cell indicated by the contained candidate cell ID.

In some embodiments, in step S7203, the SN sends a Cell Switch Command to the UE, including the TA value of the candidate cell.

In embodiments of the present disclosure, the RA Preamble may be the third information or a part of the third information in some of the aforementioned embodiments, and the first message may be the second information or a part of the second information in some of the aforementioned embodiments.

In embodiments of the present disclosure, some or all of the steps, as well as their optional implementations, may be arbitrarily combined with some or all of the steps in other embodiments, and may also be arbitrarily combined with the optional implementations of other embodiments.

In combination with some optional implementations described above, embodiments of the present disclosure also provide schematic diagrams of interaction in the communication method as shown in FIGs 7C to 7H.

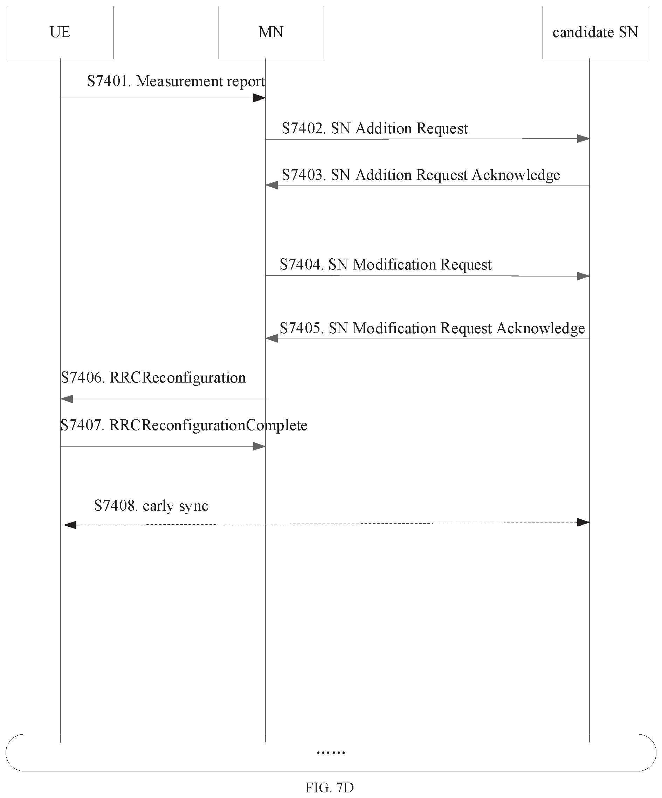

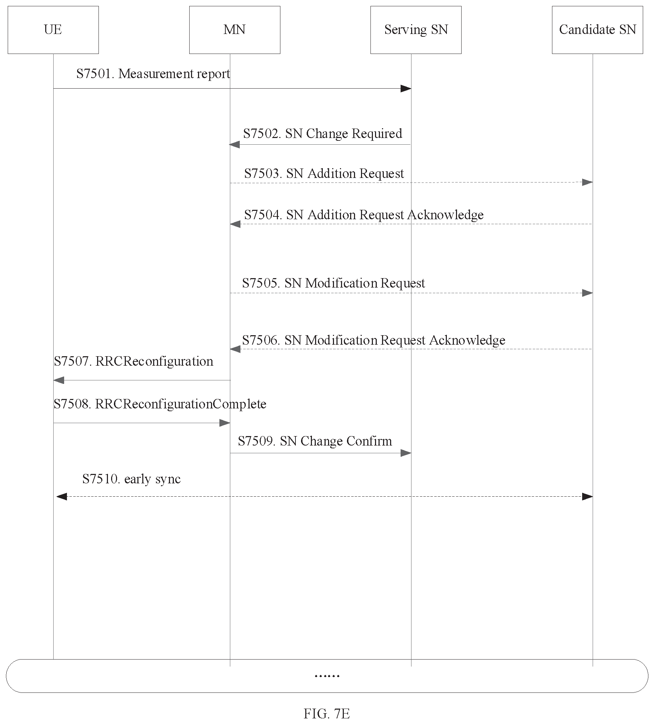

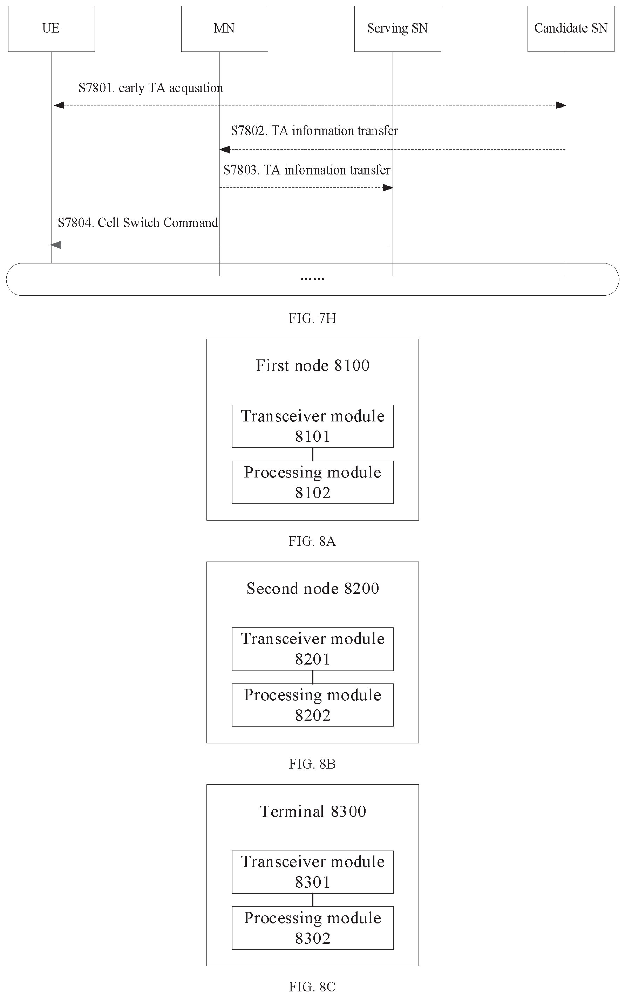

FIG. 7C and FIG. 7F may correspond to MCG LTM, FIG. 7D and FIG. 7G may correspond to MN imitated SCG LTM, and FIG. 7E and FIG. 7H may correspond to SN initiated SCG LTM.

FIG. 7C is a schematic diagram illustrating interaction in a communication method according to an embodiment of the present disclosure. As shown in FIG. 7C, this embodiment of the present disclosure relates to a communication method, and the method includes the following steps.

Step S7301: The terminal sends a measurement report to the source gNB.

Step S7302: The source gNB sends a Handover/LTM Request message to the candidate gNB.

In some embodiments, the Handover Request message or LTM Request message may be the fourth information or a part of the fourth information described in some of the aforementioned embodiments.

Step S7303: The candidate gNB performs admission control.

Step S7304: The candidate gNB sends a Handover/LTM Request Acknowledge message to the source gNB.

In some embodiments, the Handover Request Acknowledge message or the LTM Request Acknowledge message may be the fifth information or a part of the fifth information described in some of the aforementioned embodiments.

Step S7305: The source gNB sends LTM information transfer to the candidate gNB.

Step S7306: The candidate gNB sends an LTM information transfer Acknowledge message to the source gNB.

Step S7307: The source gNB sends an RRCConnectionReconfiguration message to the terminal.

In some embodiments, the RRCConnectionReconfiguration message may be the eighth information or a part of the eighth information described in some of the aforementioned embodiments.

Step S7308: The terminal sends an RRCConnectionReconfigurationComplete message to the source gNB.

Step S7309: The terminal performs early sync with the source gNB.

In some embodiments, the process from step S7301 to step S7308 may be the negotiation process of Early RACH resources. For instance, it may be referred to as the negotiation of Early RACH resources for MCG LTM in a non-DC scenario.

In some embodiments, one or more of steps S7301 to S7308 are optional. For instance, other methods can be employed for negotiating Early RACH resources. For example, early synchronization is performed based on high-layer instructions, or Early RACH resources agreed-upon in the protocol, or no negotiation for Early RACH resources is conducted.

In embodiments of the present disclosure, some or all of the steps, as well as their optional implementations, may be arbitrarily combined with some or all of the steps in other embodiments, and may also be arbitrarily combined with the optional implementations of other embodiments.

FIG. 7D is a schematic diagram illustrating interaction in a communication method according to an embodiment of the present disclosure. As shown in FIG. 7D, this embodiment of the present disclosure relates to a communication method, and the method includes the following steps.

Step S7401: The terminal sends a measurement report to the MN.

Step S7402: The MN sends an SN Addition Request message to the candidate SN.

In some embodiments, the SN Addition Request message may be the fourth information or the sixth message described in some of the aforementioned embodiments.

Step S7403: The candidate SN sends an SN Addition Request Acknowledge message to the MN.

In some embodiments, the SN Addition Request Acknowledge message may be the fifth information or the seventh message described in some of the aforementioned embodiments.

Step S7404: The MN sends an SN Modification Request to the candidate SN.

Step S7405: The candidate SN sends an SN Modification Request Acknowledge message to the MN.

Step S7406: The MN sends an RRCConnectionReconfiguration message to the terminal.

In some embodiments, the RRCConnectionReconfiguration message may be the eighth information described in some of the aforementioned embodiments.

Step S7407: The terminal sends an RRCConnectionReconfigurationComplete message to the MN.

Step S7408: The terminal performs early sync with the MN.

In some embodiments, the process from step S7401 to step S7407 may be the negotiation process of Early RACH resources. For instance, it may be referred to as the negotiation of Early RACH resources for MN initiated SCG LTM in the DC scenario.

In some embodiments, one or more of steps S7401 to S7407 are optional. For instance, other methods can be employed for negotiating Early RACH resources. For example, early synchronization is performed based on high-layer instructions, or Early RACH resources agreed upon in the protocol, or no negotiation of Early RACH resources is conducted.

In embodiments of the present disclosure, some or all of the steps, as well as their optional implementations, may be arbitrarily combined with some or all of the steps in other embodiments, and may also be arbitrarily combined with the optional implementations of other embodiments.

FIG. 7E is a schematic diagram illustrating interaction in a communication method according to an embodiment of the present disclosure. As shown in FIG. 7E, this embodiment of the present disclosure relates to a communication method, and the method includes the following steps.

Step S7501: The terminal sends a measurement report to the serving SN.

Step S7502: The serving SN sends an SN Change Required message to the MN.

Step S7503: The MN sends an SN Addition Request message to the candidate SN.

In some embodiments, the SN Change Required message and/or the SN Change Request message may be the fourth information described in some of the aforementioned embodiments.

Step S7504: The candidate SN sends an SN Addition Request Acknowledge message to the MN.

In some embodiments, the SN Addition Request Acknowledge message may be the fifth information described in some of the aforementioned embodiments.

Step S7505: The MN sends an SN Modification Request to the candidate SN.

Step S7506: The candidate SN sends an SN Modification Request Acknowledge message to the MN.

Step S7507: The MN sends an RRCConnectionReconfiguration message to the terminal.

The RRCConnectionReconfiguration message may include the MN RRCConnectionReconfiguration message and the SN RRCConnectionReconfiguration message.

In some embodiments, the RRCConnectionReconfiguration message may be the eighth information described in some of the aforementioned embodiments.

Step S7508: The terminal sends an RRCConnectionReconfigurationComplete message to the MN.

Step S7509: The terminal performs early sync with the serving SN.

In some embodiments, the Cell Switch Command may be the first information described in some of the aforementioned embodiments.

In some embodiments, the process from step S7501 to step S7509 may be the negotiation process of Early RACH resources. For instance, it may be referred to as the negotiation of Early RACH resources for SN initiated SCG LTM in the DC scenario.

In some embodiments, one or more of steps S7501 to S7509 are optional. For instance, the negotiation of Early RACH resources may be conducted in other ways. For example, early synchronization is performed based on high-layer instructions, or Early RACH resources agreed upon in the protocol, or no negotiation of Early RACH resources is conducted.

In embodiments of the present disclosure, some or all of the steps, as well as their optional implementations, may be arbitrarily combined with some or all of the steps in other embodiments, and may also be arbitrarily combined with the optional implementations of other embodiments.

FIG. 7F is a schematic diagram illustrating interaction in a communication method according to an embodiment of the present disclosure. As shown in FIG. 7E, this embodiment of the present disclosure relates to a communication method, and the method includes the following steps.

Step S7601: The terminal performs early TA acquisition with the candidate gNB.

In some embodiments, early TA acquisition may be a process where the terminal sends the third information (such as RA preamble) mentioned in some embodiments above to the candidate gNB, and enables the terminal to receive the TA values corresponding to one or more candidate cells determined by the candidate gNB.

Step S7602: The candidate gNB sends a TA information transfer message to the source gNB.

In some embodiments, the TA information transfer message may be the second information or a part of the second information described in some of the aforementioned embodiments.

Step S7603: The source gNB sends a Cell Switch Command to the terminal.

In some embodiments, the Cell Switch Command may be the first information described in some of the aforementioned embodiments.

In some embodiments, the process from step S7601 to step S7602 may be the process of negotiating the Early TA value. For instance, it may be referred to as the negotiation of the Early TA value for MCG LTM in a non-DC scenario.

In some embodiments, one or more of steps S7601 to S7603 are optional. For instance, the negotiation of the Early TA value may be conducted in other ways, or the negotiation may be skipped.

In some embodiments, steps S7601 to S7603 may be combined with some steps in the embodiment shown in FIG. 7C. For example, step S7309 in FIG. 7C may include steps S7601 to S7603 or may be replaced by steps S7601 to S7603.

In embodiments of the present disclosure, some or all of the steps, as well as their optional implementations, may be arbitrarily combined with some or all of the steps in other embodiments, and may also be arbitrarily combined with the optional implementations of other embodiments.

FIG. 7G is a schematic diagram illustrating interaction in a communication method according to an embodiment of the present disclosure. As shown in FIG. 7G, this embodiment of the present disclosure relates to a communication method, and the method includes the following steps.

Step S7701: The terminal performs early TA acquisition with the candidate SN.

In some embodiments, early TA acquisition may be a process where the terminal sends the third information mentioned in some embodiments above to the candidate SN, and enables the terminal to receive the TA values corresponding to one or more candidate cells determined by the candidate SN.

Step S7702: The candidate SN sends a TA information transfer message to the MN.

In some embodiments, the TA information transfer message may be the second information described in some of the aforementioned embodiments.

Step S7703: The MN sends a Cell Switch Command to the terminal.

In some embodiments, the Cell Switch Command may be the first information described in some of the aforementioned embodiments.

In some embodiments, the process from step S7701 to step S7702 may be the negotiation process of Early TA values. For instance, it may be referred to as the negotiation of Early TA values for MN initiated SCG LTM in the DC scenario.

In some embodiments, one or more of steps S7701 to S7702 are optional. For instance, the negotiation of the Early TA value may be conducted in other ways, or the negotiation may be skipped.

In some embodiments, steps S7701 to S7503 may be combined with some steps in the embodiment shown in FIG. 7D. For example, step S7408 in FIG. 7D may include steps S7701 to S7702, or may be replaced with steps S7701 to S7502.

In embodiments of the present disclosure, some or all of the steps, as well as their optional implementations, may be arbitrarily combined with some or all of the steps in other embodiments, and may also be arbitrarily combined with the optional implementations of other embodiments.

FIG. 7H is a schematic diagram illustrating interaction in a communication method according to an embodiment of the present disclosure. As shown in FIG. 7H, this embodiment of the present disclosure relates to a communication method, and the method includes the following steps.

Step S7801: The MN sends an SN Change Confirm message to the serving SN.

Step S7802: The terminal performs early TA acquisition with the candidate SN.

In some embodiments, early TA acquisition can be a process where the terminal sends the third information mentioned in some embodiments above to the candidate SN, and enables the terminal to receive the TA values corresponding to one or more candidate cells determined by the candidate SN.

Step S7803: The candidate SN sends a TA information transfer message to the MN.

Step S7804: The MN sends the TA information transfer message to the serving SN.

In some embodiments, the TA information transfer message may be the second information described in some of the aforementioned embodiments.

Step S7805: The serving SN sends a Cell Switch Command to the terminal.

In some embodiments, the Cell Switch Command may be the first information mentioned in some of the aforementioned embodiments.

In some embodiments, the process from step S7801 to step S7804 may be the negotiation process of Early TA values. For instance, it may be referred to as the negotiation of Early TA values for SN initiated SCG LTM in DC scenarios.

In some embodiments, one or more of steps S7801 to S7804 are optional. For instance, the negotiation of the Early TA value may be conducted in other ways, or the negotiation may be skipped.

In some embodiments, steps S7801 to S7504 may be combined with some steps in the embodiment shown in FIG. 7E. For example, step S7509 in FIG. 7E may include steps S7801 to S7804 or may be replaced by steps S7801 to S7804.

In embodiments of the present disclosure, some or all of the steps, as well as their optional implementations, may be arbitrarily combined with some or all of the steps in other embodiments, and may also be arbitrarily combined with the optional implementations of other embodiments.

Embodiments of the present disclosure also provide an apparatus for implementing any one of the above methods. For example, an apparatus is provided, including units or modules for implementing the steps performed by the terminal in any one of the above methods. For another example, another apparatus is provided, including units or modules for implementing the steps performed by the network device (e.g., access network element, core network function node, core network device, etc.) in any one of the above methods.

It should be understood that the division of units or modules in the above apparatuses is merely a division of logical functions. In actual implementations, the units or modules may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units or modules are realized by designing logical relationships among components in the circuit. For another example, in another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in the form of the hardware circuit, or partially implemented in the form of software called by the processor and the remaining part implemented in the form of the hardware circuit.

In embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or modules. In addition, the hardware circuit may be designed specifically for artificial intelligence and may be understood as an ASIC, such as a neural network processing unit (NPU), a tensor processing unit (TPU), or a deep learning processing unit (DPU).

FIG. 8A is a block diagram of a first node according to embodiments of the present disclosure. As shown in FIG. 8A, the first node 8100 may include at least one of a transceiver module 8101 or a processing module 8102. In some embodiments, the transceiver module 8101 is configured to determine to perform a cell handover to a first cell, and send first information to a terminal, wherein the first information indicates the terminal to perform the cell handover to the first cell, the first node is a node associated with a serving cell of the terminal, and the serving cell and the first cell correspond to different nodes. Optionally, the transceiver module is configured to perform at least one of the communication steps such as sending and/or receiving performed by the first node in any one of the above methods, which will not be repeated here. Optionally, the processing module is configured to perform at least one of the other steps performed by the first node in any one of the above methods, which will not be repeated here.

FIG. 8B is a block diagram of a second node according to embodiments of the present disclosure. As shown in FIG. 8B, the second node 8200 may include at least one of a transceiver module 8201 or a processing module 8202. In some embodiments, the transceiver module 8201 is configured to send second information to a first node, wherein the second information comprises timing advance (TA) related information of a first cell, the first node is a node associated with a serving cell of a terminal, the second node is a node associated with the first cell, and the first cell and the serving cell correspond to different nodes. Optionally, the transceiver module is configured to perform at least one of the communication steps such as sending and/or receiving performed by the second node in any one of the above methods, which will not be repeated here. Optionally, the processing module is configured to perform at least one of the other steps performed by the second node in any one of the above methods, which will not be repeated here.

FIG. 8C is a block diagram of a terminal according to embodiments of the present disclosure. As shown in FIG. 8C, the terminal 8300 may include at least one of a transceiver module 8301 or a processing module 8302. In some embodiments, the transceiver module 8301 is configured to receive first information sent by a first node, wherein the first node is a node associated with a serving cell of the terminal; the processing module 8302 is configured to perform a cell handover to a first cell according to the first information, where the first cell and the serving cell correspond to different nodes. Optionally, the transceiver module is configured to perform at least one of the communication steps such as sending and/or receiving performed by the terminal in any one of the above methods, which will not be repeated here. Optionally, the processing module is configured to perform at least one of the other steps performed by the terminal in any one of the above methods, which will not be repeated here.

In some embodiments, the transceiver module may include a sending module and/or a receiving module, which may be separate or integrated together. Optionally, the transceiver module may be interchanged with a transceiver.

In some embodiments, the processing module may be a module or may include a plurality of sub-modules. Optionally, the plurality of sub-modules perform all or part of the steps required to be performed by the processing module. Optionally, the processing module may be interchanged with a processor.

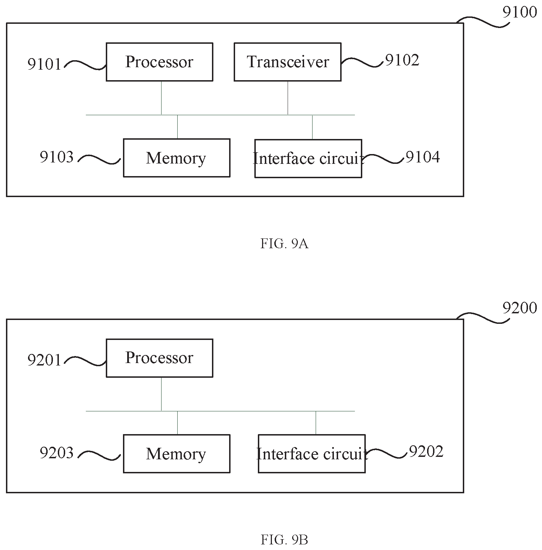

FIG. 9A is a block diagram of a communication device 9100 according to embodiments of the present disclosure. The communication device 9100 may be a network device (e.g., a first node, a second node, an access network device, a core network device, etc.), or a terminal (e.g., a user equipment, etc.), or a chip, chip system, or processor that supports the network device in implementing any one of the above methods, or a chip, chip system, or processor that supports the terminal in implementing any one of the above methods. The communication device 9100 may be configured to implement the methods described in the above method embodiments, and for details, reference may be made to the description of the above method embodiments.

As shown in FIG. 9A, the communication device 9100 includes one or more processors 9101. The processor 9101 may be a general-purpose processor or a special-purpose processor. For example, it may be a baseband processor or a central processing unit. The baseband processor is configured to process communication protocols and communication data, and the central processing unit is configured to control communication devices (such as base stations, baseband chips, terminals, terminal chips, DU or CU, etc.) to execute computer programs and process computer program data. Optionally, the communication device 9100 is used to perform any one of the above methods. Optionally, the one or more processors 9101 are configured to invoke instructions to cause the communication device 9100 to perform any one of the above methods.

In some embodiments, the communication device 9100 further includes one or more transceivers 9102. When the communication device 9100 includes one or more transceivers 9102, the transceivers 9102 perform at least one of the communication steps such as sending and/or receiving in the above methods, and the processor 9101 performs at least one of other steps. In optional embodiments, the transceiver may include a receiver and/or a transmitter, which may be separate or integrated together. Optionally, the terms such as transceiver, transceiver unit, transceiver machine, transceiver circuit, interface circuit, interface may be used interchangeably; the terms such as transmitter, transmitting unit, transmitter machine, transmitting circuit may be used interchangeably; and the terms such as receiver, receiving unit, receiver machine, receiving circuit may be used interchangeably.

In some embodiments, the communication device 9100 further includes one or more memories 9103 for storing data. Optionally, all or part of the one or more memories 9103 may be located outside the communication device 9100. In some embodiments, the communication device 9100 may further include one or more interface circuits 9104. Optionally, the interface circuit 9104 is connected to the memory 9103, and the interface circuit 9104 may be configured to receive data from the memory 9103 or other devices, and may be configured to send the data to the memory 9103 or other devices. For example, the interface circuit 9104 may read the data stored in the memory 9103 and send the data to the processor 9101.

The communication device 9100 described in the above embodiments may be a network device or a terminal, but the scope of the communication device 9100 described in the present disclosure is not limited thereto, and the structure of the communication device 9100 may not be limited by FIG. 9A. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 9B is a block diagram of a chip 9200 according to embodiments of the present disclosure. For the case where the communication device 9100 may be a chip or a chip system, reference may be made to the block diagram of the chip 9200 shown in FIG. 9B, which is not limited herein.

The chip 9200 includes one or more processors 9201. The chip 9200 is configured to perform any one of the above methods.

In some embodiments, the chip 9200 further includes one or more interface circuits 9202. Optionally, the terms such as interface circuit, interface, transceiver pin may be used interchangeably. In some embodiments, the chip 9200 further includes one or more memories 9203 for storing data. Optionally, all or part of the one or more memories 9203 may be located outside the chip 9200. Optionally, the interface circuit 9202 is connected to the memory 9203, and the interface circuit 9202 may be configured to receive data from the memory 9203 or other devices, and the interface circuit 9202 may be configured to send the data to the memory 9203 or other devices. For example, the interface circuit 9202 may read the data stored in the memory 9203 and send the data to the processor 9201.

In some embodiments, the interface circuit 9202 performs at least one of the communication steps such as sending and/or receiving in the above methods. Performing, by the interface circuit 9202, the communication steps such as sending and/or receiving in the above methods means, for example, that the interface circuit 9202 performs data exchange among the processor 9201, the chip 9200, the memory 9203, or a transceiver. In some embodiments, the processor 9201 performs at least one of other steps.

The modules and/or elements described in various embodiments such as virtual devices, physical devices, chips, etc., may be combined or separated arbitrarily according to the situation. Optionally, some or all of the steps may also be executed collaboratively by multiple modules and/or elements, without limitation here.

The present disclosure also provides a storage medium for storing instructions that, when executed on the communication device 9100, cause the communication device 9100 to perform any one of the above methods. Optionally, the storage medium is an electronic storage medium. Optionally, the storage medium is a computer-readable storage medium, which is not limited herein, and may also be a storage medium readable by other devices. Optionally, the storage medium may be a non-transitory storage medium, which is not limited herein, and may also be a transitory storage medium.

The present disclosure also provides a program product that, when executed by the communication device 9100, causes the communication device 9100 to perform any one of the above methods. Optionally, the program product is a computer program product.

The present disclosure also provides a computer program that, when running on a computer, causes the computer to perform any one of the above methods.

## Claims

1. A communication method, comprising:
determining, by a first node, to perform a cell handover to a first cell, and sending, by the first node, first information to a terminal, wherein the first information indicates the terminal to perform the cell handover to the first cell, the first node is a node associated with a serving cell of the terminal, and the serving cell and the first cell correspond to different nodes.

2. The method of claim 1, further comprising:
receiving, by the first node, second information sent by a second node, wherein the second information comprises timing advance (TA) related information of the first cell, the first information comprises a TA value of the first cell, the TA value of the first cell is determined based on the second information, and the second node is a node associated with the first cell.

3. The method of claim 2, wherein
the first node is a source base station, and the second node is a candidate base station; or
the first node is a master node (MN), and the second node is a candidate secondary node (SN); or
the first node is a serving SN, and the second node is a candidate SN.

4. The method of any one of claims 2-3, wherein the TA related information of the first cell comprises at least one of the following corresponding to the first cell: an identifier of the first cell, a TA value, a preamble, a random access radio network temporary identifier (RA-RNTI), or an identifier of the second node.

5. The method of any one of claims 2-4, wherein the first node is a source base station and the second node is a candidate base station, or the first node is an MN and the second node is a candidate SN,
the second information is determined and sent by the second node according to third information, the third information is sent by the terminal, and the third information comprises a random access (RA) preamble.

6. The method of any one of claims 2-5, wherein the first node is a serving SN and the second node is a candidate SN,
receiving, by the first node, the second information sent by the second node comprises:
receiving, by the first node, the second information sent by an MN, wherein the second information is determined and sent by the second node to the MN according to third information, the third information is sent by the terminal, and the third information comprises an RA preamble.

7. The method of claim 5 or 6, wherein the third information is sent by the terminal using a first random access channel (RACH) resource, and the first RACH resource is used for early synchronization between the first cell and the terminal.

8. The method of any one of claims 1-7, further comprising:
sending, by the first node, fourth information to a second node, wherein the fourth information indicates the second node to determine a first RACH resource, the second node is a node associated with the first cell, and the first RACH resource is used for early synchronization between the first cell and the terminal; and
receiving, by the first node, fifth information sent by the second node, wherein the fifth information indicates the first RACH resource.

9. The method of claim 8, further comprising:
sending, by the first node, eighth information to the terminal, wherein the eighth information indicates the first RACH resource.

10. The method of claim 8 or 9, wherein
the fourth information comprises a first configuration list, the first configuration list indicates a second RACH resource that has been configured by the first node, the second RACH resource is used for early synchronization between at least one second cell and the terminal, the fourth information indicates the second node to determine the first RACH resource based on the second RACH resource;
and/or, the method further comprises:
sending, by the first node, sixth information to the second node, wherein the sixth information comprises the first configuration list and indicates the second node to update the first RACH resource according to the second RACH resource.

11. The method of claim 8 or 9, wherein sending, by the first node, the sixth information to the second node comprises:
determining, by the first node that there is a conflict between the first RACH resource and the second RACH resource, and sending, by the first node, the sixth information to the second node.

12. The method of any one of claims 9-11, further comprising:
receiving, by the first node, seventh information sent by the second node, where the seventh information indicates updated first RACH resource.

13. The method of any one of claims 9-12, wherein the first configuration list comprises at least one of:
a node identifier of a third node, wherein the third node is a node associated with the second cell;
a cell identifier of the second cell;
a configuration identifier corresponding to the second cell; or
a configuration of an RACH resource corresponding to the configuration identifier.

14. A communication method, comprising:
sending, by a second node, second information to a first node, wherein the second information comprises timing advance (TA) related information of a first cell, the first node is a node associated with a serving cell of a terminal, the second node is a node associated with the first cell, and the first cell and the serving cell correspond to different nodes.

15. The method of claim 14, wherein
the first node is a source base station, and the second node is a candidate base station; or
the first node is a master node (MN), and the second node is a candidate secondary node (SN); or
the first node is a serving SN, and the second node is a candidate SN.

16. The method of any one of claims 14-15, wherein the TA related information of the first cell comprises at least one of the following corresponding to the first cell: an identifier of the first cell, a TA value, a preamble, a random access radio network temporary identifier (RA-RNTI), or an identifier of the second node.

17. The method of any one of claims 14-16, wherein the first node is a source gNB and the second node is a candidate gNB, or the first node is an MN and the second node is a candidate SN,
sending, by the second node, the second information to the first node comprises:
receiving, by the second node, third information sent by the terminal, wherein the third information comprises a random access (RA) preamble; and
determining and sending, by the second node, the second information to the first node according to the third information.

18. The method of any one of claims 14-17, wherein the first node is a serving SN and the second node is a candidate SN,
sending, by the second node, the second information to the first node comprises:
sending, by the second node, the second information to the first node via an MN, wherein the second information is determined by the second node according to third information, the third information is sent by the terminal, and the third information comprises an RA preamble.

19. The method of claim 17 or 18, wherein the third information is sent by the terminal using a first random access channel (RACH) resource, and the first RACH resource is used for early synchronization between the first cell and the terminal.

20. The method of any one of claims 14-19, further comprising:
receiving, by the second node, fourth information sent by the first node;
determining, by the second node, a first RACH resource, wherein the first RACH resource is used for early synchronization between the first cell and the terminal; and
sending, by the second node, fifth information to the first node, wherein the fifth information indicates the first RACH resource.

21. The method of claim 20, wherein
the fourth information comprises a first configuration list, the first configuration list indicates a second RACH resource that has been configured by the first node, the second RACH resource is used for early synchronization between at least one second cell and the terminal, the fourth information indicates the second node to determine the first RACH resource based on the second RACH resource;
and/or, determining, by the second node, the first RACH resource comprises: receiving, by the second node, sixth information sent by the first node, wherein the sixth information comprises the first configuration list; and updating, by the second node, the first RACH resource according to the second RACH resource.

22. The method of claim 21, further comprising:
sending, by the second node, seventh information to the first node, wherein the seventh information indicates the updated first RACH resource.

23. The method of any one of claims 21-22, wherein the first configuration list comprises at least one of:
a node identifier of a third node, wherein the third node is a node associated with the second cell;
a cell identifier of the second cell;
a configuration identifier corresponding to the second cell; or
a configuration of an RACH resource corresponding to the configuration identifier.

24. A communication method, comprising:
receiving, by a terminal, first information sent by a first node, wherein the first node is a node associated with a serving cell of the terminal; and
performing, by the terminal, a cell handover to a first cell according to the first information, wherein the first cell and the serving cell correspond to different nodes.

25. The method of claim 24, further comprising:
performing, by the terminal, the cell handover to the first cell according to a timing advance (TA) value of the first cell in the first information, wherein the TA value of the first cell is determined by the first node according to second information, the second information is sent by a second node, the second information comprises TA related information of the first cell, and the second node is a node associated with the first cell.

26. The method of claim 25, wherein
the first node is a source base station, and the second node is a candidate base station; or
the first node is a master node (MN), and the second node is a candidate secondary node (SN); or
the first node is a serving SN, and the second node is a candidate SN.

27. The method of any one of claims 24-25, wherein the TA related information of the first cell comprises at least one of the following corresponding to the first cell: an identifier of the first cell; a TA value; a preamble; a random access radio network temporary identifier (RA-RNTI), or an identifier of the second node.

28. The method of any one of claims 23-26, further comprising:
sending, by the terminal, third information to the second node, wherein the third information is used by the second node to determine the second information, and the third information comprises a random access (RA) preamble.

29. The method of claim 27, wherein the third information is sent by the terminal using a first random access channel (RACH) resource, and the first RACH resource is used for early synchronization between the first cell and the terminal.

30. The method of any one of claims 24-29, further comprising:
receiving, by the terminal, eighth information sent by the first node, wherein the eighth information indicates a first RACH resource, and the first RACH resource is used for early synchronization between the first cell and the terminal.

31. A first node, comprising:
a transceiver module, configured to determine to perform a cell handover to a first cell, and send first information to a terminal, wherein the first information indicates the terminal to perform the cell handover to the first cell, the first node is a node associated with a serving cell of the terminal, and the serving cell and the first cell correspond to different nodes.

32. A second node, comprising:
a transceiver module, configured to send second information to a first node, wherein the second information comprises timing advance (TA) related information of a first cell, the first node is a node associated with a serving cell of a terminal, the second node is a node associated with the first cell, and the first cell and the serving cell correspond to different nodes.

33. A terminal, comprising:
a transceiver module, configured to receive first information sent by a first node, wherein the first node is a node associated with a serving cell of the terminal; and
a processing module, configured to perform a cell handover to a first cell according to the first information, where the first cell and the serving cell correspond to different nodes.

34. A first node, comprising:
one or more processors; and
a memory, coupled to the one or more processors, and storing executable instructions, wherein when the executable instructions are executed by the one or more processors, the first node is caused to perform the communication method of any one of claims 1-13.

35. A second node, comprising:
one or more processors; and
a memory, coupled to the one or more processors, and storing executable instructions, wherein when the executable instructions are executed by the one or more processors, the second node is caused to perform the communication method of any one of claims 14-23.

36. A terminal, comprising:
one or more processors; and
a memory, coupled to the one or more processors, and storing executable instructions, wherein when the executable instructions are executed by the one or more processors, the terminal is caused to perform the communication method of any one of claims 24-30.

37. A communication system, comprising a first node, a second node and a terminal, wherein the first node is configured to implement the communication method of any one of claims 1-13, the second node is configured to implement the communication method of any one of claims 14-23, and the terminal is configured to implement the communication method of any one of claims 24-30.

38. A storage medium, storing instructions, wherein when the instructions are running on a communication device, the communication device is caused to perform the communication method of any one of claims 1-13, or claims 14-23, or claims 24-30.

39. A computer program product, comprising a computer program and/or instruction, wherein when the computer program and/or instructions are executed by a communication device, the communication method of any one of claims 1-13, or claims 14-23, or claims 24-30 is implemented.
